(19) Europäisches Patentamt

European Patent Office

Office européen des brevets

(11) **EP 1 677 013 A1**

(12) **EUROPEAN PATENT APPLICATION**

(43) Date of publication:
**05.07.2006 Bulletin 2006/27**

(51) Int Cl.:
***F16B 37/04*** *(2006.01)*

(21) Application number: **05028505.5**

(22) Date of filing: **27.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.12.2004 JP 2004378789**

(71) Applicant: **Nagayama Electric Co., Ltd.**
**Kishiwada-shi**
**Osaka 596-0823 (JP)**

(72) Inventor: **Nagayama, Yutaka**
**Kishiwada-shi,**
**Osaka 596-0823 (JP)**

(74) Representative: **Gritschneder, Martin et al**
**Abitz & Partner**
**Poschingerstrasse 6**
**81679 München (DE)**

(54) **T-nut**

(57) There is provided a T-nut having a tubular shank 2, an external flange portion 33a extending outwardly from a first end of the shank 2, and an internal flange portion 33b extending inwardly opposite to the external flange portion 33a of the tubular shank 2, all of which are integrally formed from a metal plate by pressing. A hole 44 is formed at the vicinity of the center part of the internal flange portion 33b. This hole 44 allows the oil to enter the inside of the tubular shank to the extent that the oil is served as a lubricant.

(a)

Fig. 1

EP 1 677 013 A1

# Description

Field of the Invention

The present invention relates to a T-nut having an external flange extending outwardly and an internal flange extending inwardly from one end of a hollow shank.

Background of the Invention

There has been known T-nuts, as disclosed, for example, in Japanese Patent Laid-Open Publications Nos. H04-341606 or H06-323315. These T-nuts have a shank having a to-be-caulked portion which is made thin in the thickness.

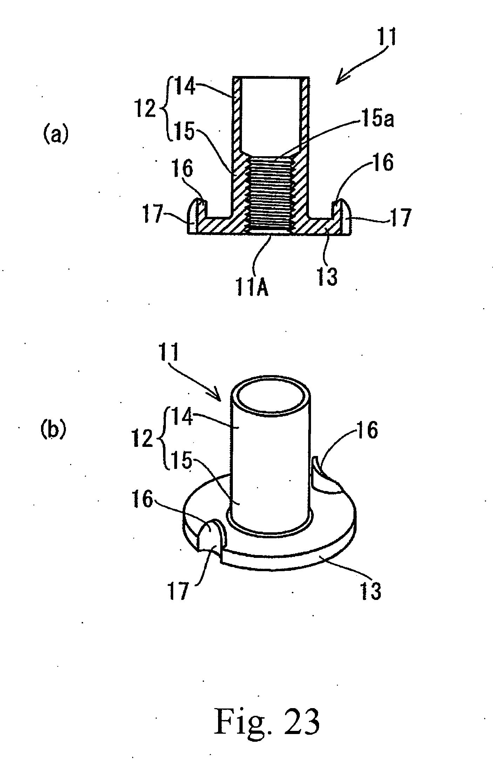

A T-nut 11 disclosed in the above Japanese Patent Laid-Open Publication No. H04-341606 has a shape as shown in FIG. 23(a)(b), comprising a shank 12 and a flange 13 extending outwardly from a first end of the shank 12, which can be integrally formed, for example, by processing an iron-based metal plate.

The shank 12 has a hollow tubular shape with an even outer diameter. The shank 12 includes a to-be-caulked portion 14 at a second end of the shank, which is the other side of the first end, and has a female screw 15a formed in the rest of the internal surface of a female screw portion 15, that is the portion except for the to-be-caulked portion 14. The to-be-caulked portion 14 has a thinner wall compared to a part where the female screw portion 15 is formed. Thus, in a machining process of forming the female screw 15a, a thread cutting operation can be performed either from the side of the first end of the shank 12 or the side of the second end thereof.

The flange 13 has a pair of claws 16 formed by inwardly pressing a part of the outer edge of the flange 13 from the outside. The pair of claws 16 protrudes toward the second end of the shank 12 while being opposed to one another at 180 degrees. As a result of forming the claws 16, a pair of corresponding notches 17, each having generally a semicircular cross-section, are left in the outer edge of the flange 13.

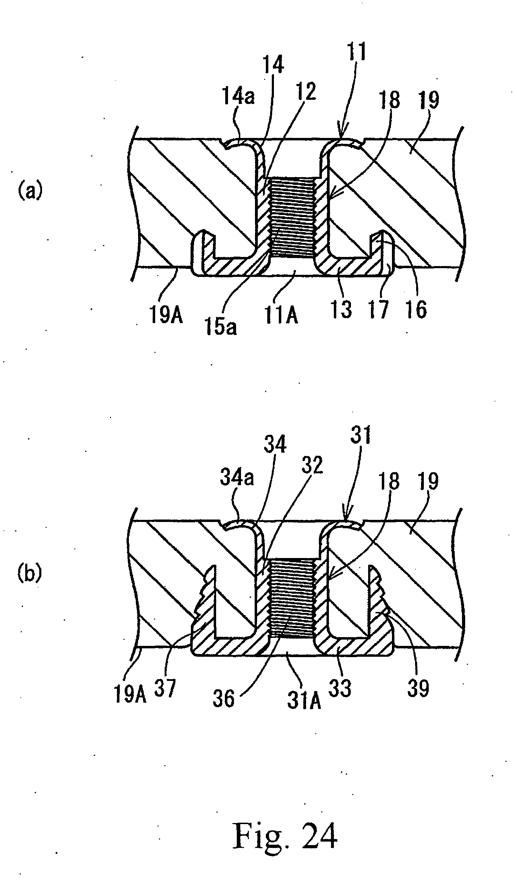

The above T-nut 11 is used, for example, as shown in Fig. 24(a). Referring to Fig. 24(a), the shank 12 is first inserted into a through hole 18 which is formed in advance in a fixing object 19 made of a resin material or wood, and then the to-be-caulked portion 14 is caulked by a caulking machine (not shown in the drawings) to form a caulked portion 14a on the side of one of the surfaces of the fixing object 19. Concurrently, the claws 16 are also driven to bite into the opposite surface of the fixing object 19. Thereby, an operation of fixing the T-nut 11 to the fixing object 19 is completed.

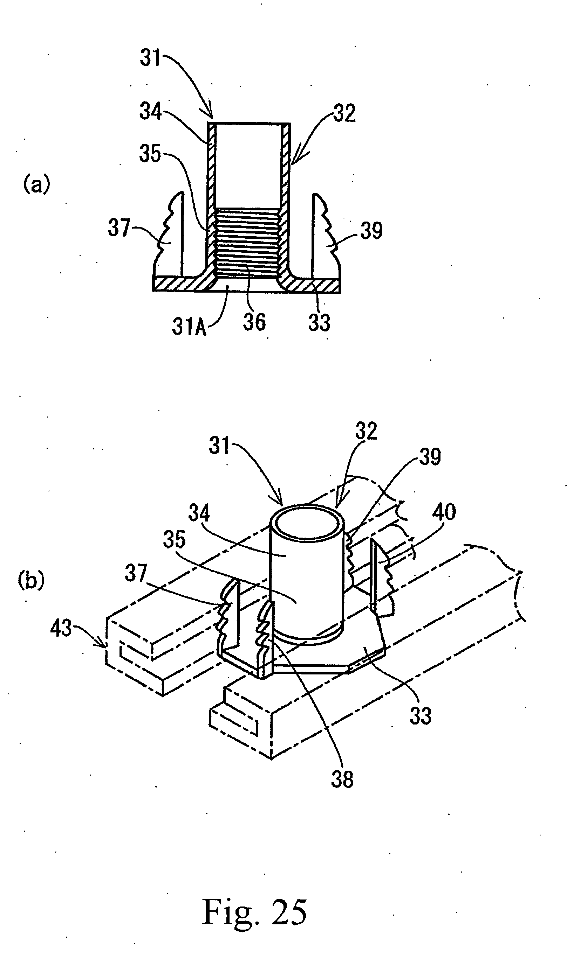

A T-nut 31 disclosed in the above Japanese Patent Laid-Open Publication No. H06-323315 has a shape as shown in Fig. 25(a)(b), comprising a shank 32 and a flange 33 extending outwardly from a first end of the shank 32. The shank 32 and the flange 33 can be integrally formed, for example, by processing an iron-based metal plate. The shank 32 has a female screw portion 35 having a female screw 36 formed in the inner surface of the shank, and a to-be-caulked portion 34. The structure of the T-nut 31 is different from that of the aforementioned T-nut 11 in Fig. 23 (a)(b) in that the outer peripheral portion of the flange 33 of the T-nut 33 is provided with two pairs of claws 37/38, 39/40 disposed as being opposed to one another with respect to the radial direction of the flange 33 and each extending from the first end toward the second end of the shank 32, and the flange 33 has a substantially octagonal shape in its entirety.

The T-nut 31 is generally referred to as "hopper feed T-nut," because the T-nut can be smoothly moved along a feed track 43 (refer to Fig. 25 (b)) of a nut setter for fixedly setting the T-nut 31 to a fixing object 19 to allow the nut setter to automatically feed the T-nut. The detail of one type of the hopper feed T-nut is disclosed in British Patent No. 1,157,734.

The T-nut 31 is used in the same manner as that of the T-nut 11. For example, as shown in Fig. 24 (b), the shank 32 of the T-nut 31 is inserted into a through hole 18 of a fixing object 19, and then the to-be-caulked portion 34 is caulked by a caulking machine to form a caulked portion 34a on the side of one of the surfaces of the fixing object 19. Simultaneously, the claws 37 to 40 are driven to bite into the opposite surface of the fixing object 19.

In the fixed state of the T-nut 31, the claws 37 to 40 prevent the T-nut 31 from being rotated relative to the fixing object 19, and the flange 33 and the caulked portion 34a cramps the fixing object 19 therebetween to prevent the T-nut 31 from escaping from the through-hole 18. Thus, the T-nut 31 is firmly fixed to the fixing object 19, and this fixed state can be semi-permanently maintained. It is acknowledged that as to another type of T-nut having no to-be-caulked portion, it needs the same operation except for the caulking process.

Objectives to be Solved by the Invention

After the T-nut 11, 31 is fixed to the fixing object 19 as shown in Fig. 24(a)(b), one surface 19A of the fixing object 19 is applied with a liquid such as oil or paint, or is immersed into the liquid, in some cases.

In such a case, there may cause a large amount of oil or paint to enter the opening portion 11A, 31A of the T-nut 11, 31 from the first end of the shank 12, 32. The liquid which has entered into the shank 12, 32 of the T-nut 11, 31 has to be removed in view of adverse effects on subsequent operations and quality maintenance. However, it is a complicated and time-consuming matter to remove the oil or paint entered into the inside of the shank 12, 32 of the T-nuts 11,31.

The same inventor as the present invention has developed a T-nut having a bottom-sealing member (not shown), which completely seals the opening portions 11A, 31A as described above, in order to prevent the oil or paint from entering the shank 12, 32 therefrom.

However, it is also necessary to put oil to the female screw portion 15a, 36, serving as a lubricant, so that a bolt (not shown) is mounted smoothly at the T-nut 11, 31 mounted on the fixing object 19. Also, in the T-nut in which the opening portion 11A, 31A of the shank 12, 32 is completely sealed by the bottom sealing member (not shown), when a bolt is mounted into the female screw portion from the opposite of the bottom sealing member, the bolt is entered while the air in the shank is compressed to the bottom sealing member. Together with the missing of the above described lubricant, there has been concerned that the bolt can not be smoothly mounted in the female screw portion of the T-nut.

The present invention has been accomplished in view of the points of the prior art, and the objective of the present invention is to provide a T-nut having an improved structure capable of preventing the oil or paint from entering the inside of the shank as much as possible, but allowing a little amount of oil to enter the inside of the shank, thereby a bolt being always smoothly screwed to be mounted.

Summary of the Invention

In order to effectively achieve the objectives as explained above, a T-nut having the following constitution has been developed in the present invention.

Namely, in the present invention of the first aspect, there is provided a T-nut characterized in comprising a tubular shank, an external flange portion extending outwardly from a first end of the shank, an internal flange portion extending inwardly to the opposite side of the external flange portion of the tubular shank, the T-nut being integrally formed by pressing a metal plate, wherein at least part of the tubular shank has a female screw portion having a female screw formed therein, and the internal flange portion has a hole formed in the vicinity of the center part formed at the time when the internal flange is integrally formed with the shank and the external flange portion by pressing the metal plate.

Also, in the present invention of the second aspect, there is provided a T-nut characterized in comprising a tubular shank, an external flange portion extending outwardly from a first end of the shank, an internal flange portion extending inwardly to the opposite side of the external flange portion of the tubular shank, the T-nut being integrally formed by pressing a metal plate, wherein the internal flange portion has a hole formed in the vicinity of the center part formed at the time when the internal flange is integrally formed with the shank and the external flange portion by pressing the metal plate.

Also, in the present invention of the third aspect, there is provided a T-nut according to the fist or second aspect, wherein the external flange portion has a plurality of claws directed from the first end to a second end and extending vertically or substantially vertically thereto on the outer periphery.

Also, in the present invention of the fourth aspect, there is provided a T-nut according to any of the first to third aspects, wherein the external flange portion has a circular or substantially circular shape.

Also, in the present invention of the fifth aspect, there is provided a T-nut according to any of the first to third aspects, wherein the external flange portion has an octagonal, substantially octagonal or modified octagonal shape.

Also, in the present invention of the sixth aspect, there is provided a T-nut according to any one of the first to fifth aspects, wherein the internal flange portion has an exposed outer surface formed in a ring or concave-convex shape.

Also, in the present invention according to the seventh aspect, there is provided a T-nut according to any one of the first to fifth aspects, wherein the external flange portion has an exposed outer surface, which is in the same side of the exposed outer surface of the internal flange portion, formed in a ring or concave-convex shape together with the exposed outer surface of the internal flange portion.

Also, in the present invention of the eighth aspect, there is provided a T-nut according to any one of the first to fifth aspects, wherein the exposed outer surface of the internal flange portion is formed to have a convex.

Also, in the present invention of the ninth aspect, there is provided a T-nut according to any one of the first to fifth aspects, wherein the exposed outer surface of the internal flange portion is formed to have a concave.

Also, in the present invention of the tenth aspect, there is provided a T-nut according to any one of the first to ninth aspects, wherein the shank comprises a to-be-caulked portion which is formed over a given length from the second end thereof.

Also, in the present invention of the eleventh aspect, there is provided a T-nut according to any one of the first to tenth aspects, wherein the shank has an outer periphery surface gradually expanding from the second end side toward the first end side thereof.

Also, in the invention of the twelfth aspect, there is provided a T-nut according to any one of the first to tenth aspects, wherein the shank comprises a stepped portion, a tubular upper portion extending from a second end, opposite to the first end, an enlarged tubular bottom portion having the outer periphery larger than the outer diameter of the tubular upper portion and extending from the stepped portion to the external flange portion.

Also, in the invention of the thirteenth aspect, there is provided a T-nut according to the first aspect or any one of the third to tenth aspects, wherein the shank having the female screw portion has a to-be-caulked portion formed over a certain length from the second end and the to-be-caulked portion has an inner diameter greater than that of the female screw portion and an outer diameter greater than that of the female screw portion.

Also, in the invention of the fourteenth aspect, there is provided A T-nut according to the tenth aspect, further comprising an annular groove formed over the outer periphery of the shank in the vicinity of the boundary between the to-be-caulked portion and the female screw portion.

Also, in the invention of the fifteenth aspect, there is provided a T-nut according to any one of the first to fourteenth aspects, wherein the external flange portion has protrusions formed therein protruding toward the second end.

Also, in the invention of the sixteenth aspect, there is provided a T-nut according to any one of the third to fifteenth aspects, wherein the claws are formed notched.

Also, in the invention of the seventeenth aspect, there is provided a T-nut according to any one of the third to fifteenth aspects, wherein the claws are formed to have a hook shape.

Also, in the invention of eighteenth aspect, there is provided a T-nut according to the fourth aspect or any one of the fifth to seventeenth aspects, wherein the external flange portion has a relationship that the longitudinal length is greater than the side length.

Also, in the invention of nineteenth aspect, there is provided a T-nut according to the fourth aspect or any one of the fifth to seventeenth aspects, wherein the external flange portion has a relationship that the longitudinal length is equal to the side length.

Also, in the invention of twentieth aspect, there is provided a T-nut according to the fourth aspect or any one of the fifth to seventeenth aspects, wherein the external flange portion has a relationship that the longitudinal length is smaller than the side length.

Also, in the invention of twenty-first aspect, there is provided a T-nut according to the first aspect or any one of the third to twentieth aspects, wherein a space is formed between the female screw portion and the internal flange portion.

Also, in the invention of the twenty-second aspect, there is provided a T-nut according to any one of the first to seventh aspects or any one of the tenth to twenty-first aspects, wherein the exposed outer surfaces of the internal flange portion and of the external flange portion are formed in a concave-convex shape.

The T-nut of the present invention has the internal flange portion almost closing the first end of the shank, so as to prevent paint and oil from entering thereinside, but since a hole is formed at the center of the internal flange portion such that a small amount of viscous oil can be entered therethrough to lubricate the inside surface of the shank. When a volt is screwed with the shank, it can be smoothly screwed by the lubricant. Further, because the T-nut of the present invention has the hole as mentioned here, air inside the shank can be released therethrough at the time when the volt is screwed with the shank, promoting the easiness in engaging the volt with the shank. These effects of the present invention can be obtained not only in the T-nut having a female screw portion inside the shank, but in the T-nut without the female screw portion.

Also, in the T-nut of the present invention, claws are formed which can be engaged with the fixing object for assuredly attaching the T-nut to the fixing object.

Also, according to the present invention, the T-nut has a to-be-caulked portion formed in the shank, which provides an effect that the T-nut is firmly fixed in a fixing object by a caulking process.

Also, according to the present invention, the T-nut has a stepped portion formed in the shank, which provides an effect that the T-nut is firmly fixed to the fixing object. Further, an enlarged tubular bottom portion is formed over the portion from the stepped portion to the external flange portion, so that the enlarged tubular bottom portion is pressed toward the through hole of the fixing object when the T-nut is driven into the fixing object, further securing the fixation of the T-nut to the fixing object.

Also, in an embodiment that the T-nut according to the present invention has a to-be-caulked portion with an inner diameter greater than that of the female screw portion and an outer diameter greater than that of the female screw portion, it is necessary to make the diameter of the bottom hole of a fixing object larger than at least the outer diameter of the to-be-caulked portion. In a condition where the T-nut is driven into the fixing object, a gap can be generated between the female screw portion and the inner surface of the bottom hole. However, the caulking of the to-be-caulked portion can ensure the fixation of the T-nut to the fixing object.

Further, the annular groove over the outer periphery of the shank in the vicinity of the boundary between the to-be-caulked portion and the female screw portion, formed in the T-nut according to the present invention, provides a T-nut suitable for recycling.

Also, according to the present invention, the T-nut has a shank formed in a shape in which the outer periphery is gradually expanding from the second end toward the first end, ensuring the T-nut to be fixed to the fixing object.

Also, according to the present invention, the T-nut has protrusions formed in the external flange portion to protrude toward the second end side, whereby the protrusions are driven into the fixing object firmly when the shank of the T-nut is fitted into a through hole of the fixing object. The T-nut is firmly fixed into the fixing object.

Also, the T-nut according to the present invention has claws having a notched shape or a hook shape, whereby the claws are driven into the fixing object firmly when the shank of the T-nut is fitted into a through hole of the fixing object. This T-nut is more firmly fixed into the fixing object.

Brief Description of the Drawings

Fig. 1 shows sectional side views and bottom views of T-nuts according to embodiments of the present invention.

Fig. 2 shows sectional side views and bottom views of T-nuts according to other embodiments of the present invention.

Fig. 3 shows sectional side views of modifications of the internal flange portion.

Fig. 4 shows perspective views of T-nuts of the present invention.

Fig. 5 shows an explanatory view of a T-nut of the present invention in its fixed state.

Fig. 6 shows an explanatory view of various types of T-nut of the present invention.

Fig. 7 shows bottom views of various types of T-nut of the present invention.

Fig. 8 shows a sectional side view of a T-nut according to still another embodiment of the present invention.

Fig. 9 shows explanatory views of the T-nut in FIG. 8 in its fixed state.

Fig. 10 shows sectional side views of various types of T-nut of the present invention.

Fig. 11 shows sectional side views of various types of T-nut of the present invention.

Fig. 12 shows sectional plan views of the substantial portions of various types of T-nut of the present invention.

Fig. 13 shows sectional side views and bottom views of various types of T-nut of the present invention.

Fig. 14 shows sectional side views and bottom views of various types of T-nut of the present invention.

Fig. 15 shows sectional side views and bottom views of various types of T-nut of the present invention.

Fig. 16 shows a bottom view and a side view of one type of T-nut of the present invention.

Fig. 17 shows bottom views and side views of various types of T-nut of the present invention.

Fig. 18 shows an explanatory view of various types of T-nut of the present invention.

Fig. 19 shows an explanatory view of various types of T-nut of the present invention.

Fig. 20 shows an explanatory view of various types of T-nut of the present invention.

Fig. 21 shows a partial sectional side view and a plan view of a T-nut according to still another embodiment of the present invention.

Fig. 22 shows a partial sectional side view and a plan view of a T-nut according to still another embodiment of the present invention.

Fig. 23 shows a sectional side view and a perspective view of a conventional T-nut.

Fig. 24 shows sectional side views of conventional T-nut in their fixed state.

Fig. 25 shows an explanatory view of another conventional T-nut.

Fig. 26 shows a sectional side view and a bottom view of a T-nut of the present invention, wherein the exposed outer surface of the internal flange portion is formed flat.

Fig. 27 shows a sectional side view and a bottom view of a T-nut according to another embodiment.

Fig. 28 shows a sectional side view of a T-nut according to another embodiment.

Fig. 29 shows sectional side views of various types of T-nuts, wherein the exposed outer surface of the internal flange portion is formed flat.

Fig. 30 shows sectional side views of various types of T-nuts, wherein the exposed outer surface of the internal flange portion is formed flat.

Fig. 31 shows sectional side views and bottom views of various types of T-nuts, wherein the exposed outer surface of the internal flange portion is formed flat.

Fig. 32 shows sectional side views and bottom views of various types of T-nuts, wherein the exposed outer surface of the internal flange portion is formed flat.

Fig. 33 shows sectional side views and bottom views of various types of T-nuts, wherein the exposed outer surface of the internal flange portion is formed flat.

Fig. 34 shows a bottom view and a side view of one type of T-nut, wherein the exposed outer surface of the internal flange portion is formed flat.

Fig. 35 shows bottom views and side views of various types of T-nuts, wherein the exposed outer surface of the internal flange portion is formed flat.

Fig. 36 shows an explanatory view of various types of T-nuts, wherein the exposed outer surface of the internal flange portion is formed flat.

Fig. 37 shows an explanatory view of various types of T-nuts, wherein the exposed outer surface of the internal flange portion is formed flat.

Fig. 38 shows an explanatory view of various types of T-nuts, wherein the exposed outer surface of the internal flange portion is formed flat.

Fig. 39 shows a partial sectional side view and a plan view of a T-nut according to still another embodiment, wherein the exposed outer surface of the internal flange portion is formed flat.

Fig. 40 shows a partially sectional side view and a plan view of a T-nut according to still another embodiment, wherein the exposed outer surface of the internal flange portion is formed flat.

Fig. 41 shows a sectional side view and a bottom view of a T-nut of the present invention, wherein the exposed outer surface of the internal flange portion is formed as a convex surface.

Fig. 42 shows a sectional side view and a bottom view of a T-nut according to another embodiment.

Fig. 43 shows a sectional side view of a T-nut according to another embodiment.

Fig. 44 shows sectional side views of various types of T-nuts, wherein the exposed outer surface of the internal flange portion is formed as a convex surface.
Fig. 45 shows sectional side views of various types of T-nuts, wherein the exposed outer surface of the internal flange portion is formed as a convex surface.
Fig. 46 shows sectional side views and bottom views of various types of T-nuts, wherein the exposed outer surface of the internal flange portion is formed as a convex surface.
Fig. 47 shows sectional side views and a bottom view of various types of T-nuts, wherein the exposed outer surface of the internal flange portion is formed as a convex surface.
Fig. 48 shows sectional side views and bottom views of various types of T-nuts, wherein the exposed outer surface of the internal flange portion is formed as a convex surface.
Fig. 49 shows a bottom view and a side view of one type of T-nut, wherein the exposed outer surface of the internal flange portion is formed as a convex surface.
Fig. 50 shows bottom views and side views of various types of T-nut, wherein the exposed outer surface of the internal flange portion is formed as a convex surface.
Fig. 51 shows an explanatory view of various types of T-nuts, wherein the exposed outer surface of the internal flange portion is formed as a convex surface.
Fig. 52 shows an explanatory view of various types of T-nuts, wherein the exposed outer surface of the internal flange portion is formed as a convex surface.
Fig. 53 shows an explanatory view of various types of T-nuts, wherein the exposed outer surface of the internal flange portion is formed as a convex surface.
Fig. 54 shows a partial sectional side view and a plan view of a T-nut according to still another embodiment, wherein the exposed outer surface of the internal flange portion is formed as a convex surface.
Fig. 55 shows a partial sectional side view and a plan view of a T-nut according to still another embodiment, wherein the exposed outer surface of the internal flange portion is formed as a convex surface.

Detailed Description of the Invention

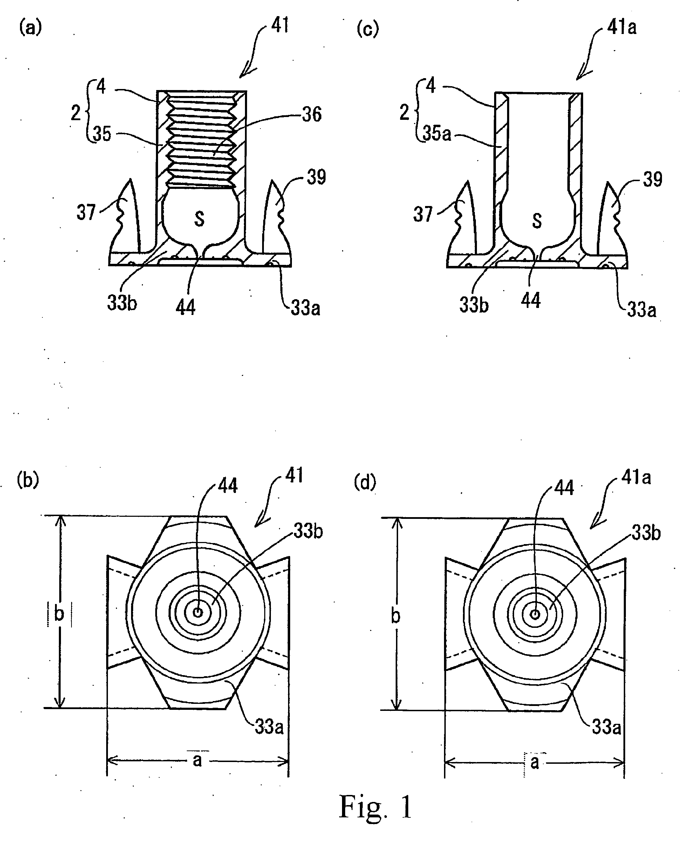

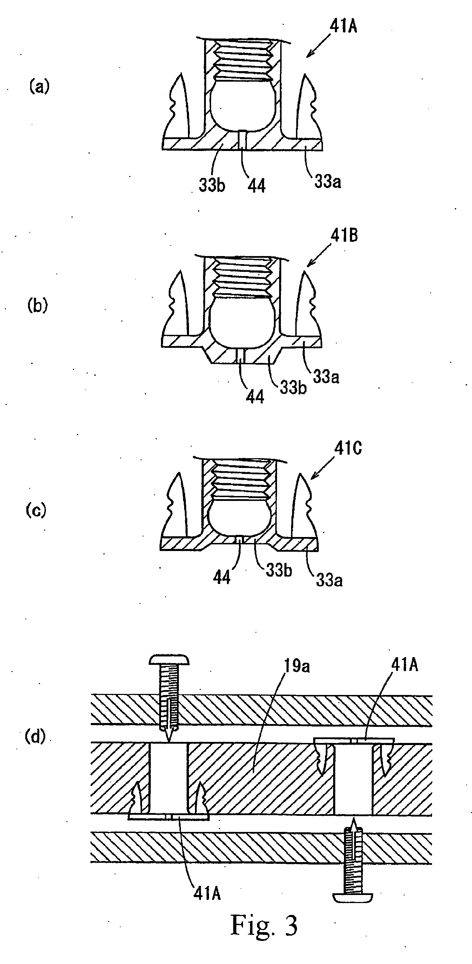

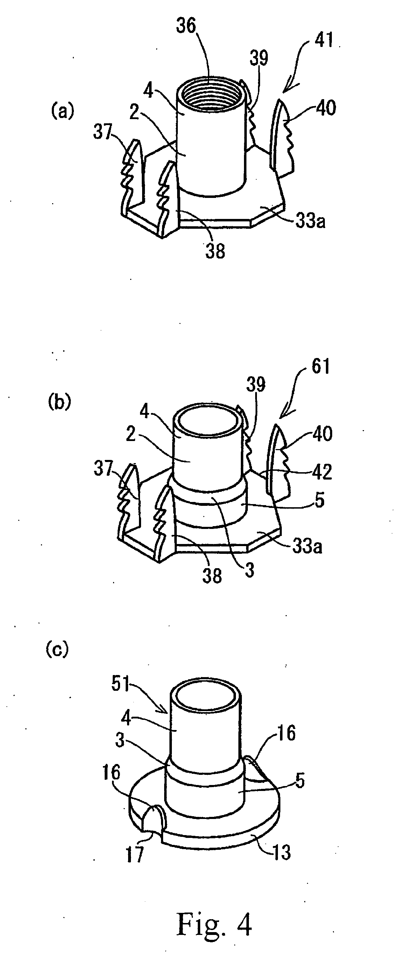

Hereinafter, the present invention is described based on the embodiment with reference to the drawings.
As shown in Figs. 1(a)(b) and Fig. 4(a), a T-nut 41 according to one embodiment of the present invention comprises a tubular shank 2, an external flange portion 33a that extends outwardly from a first end of this shank, an internal flange portion 33b that extends inwardly, opposite to the direction of the external flange portion 33a of the above tubular shank 2, and two pairs of claws, 37 and 38, 39 and 40 that extend to a direction from the first end to a second end, i.e. vertically or substantially vertically to the external flange portion 33a, on a periphery part of the external flange portion 33a, which are integrally formed by pressing from a metal plate. The T-nut of the present invention further comprises a female screw portion 35 where a female screw 36 is formed at least on one part of the shank 2, and a small through hole 44 formed near the center of the internal flange portion 33b while the internal flange portion 33b is integrally formed with the shank 2 and the external flange portion 33a from a metal plate by pressing. The hole 44 is a through hole having a diameter of about 1mm (or about 1mm x 1mm in square). The shape of the hole 44 is not limited, but preferably is has a circular shape or a square shape. The size of the hole 44 is not limited to 1mm, but can be larger or smaller than this size. The area of the hole is defined to the extent that the oil can be entered as serving as a lubricant while preventing oil or paint from entering too much. The area of the hole can be between 0.1mm$^2$ to 1.5 mm$^2$ in one embodiment, and can be between 0.05 mm$^2$ to 0.8 mm$^2$ in another embodiment. The hole may be enlarged from the exposed surface of the internal flange portion to the inside of the tubular shank, as shown in Figs. 1 (a)(c).
The above two pairs of claws, 37 and 38, 39 and 40 have the external edges formed notched (or hook shape) and are arranged oppositely with respect to the radial direction of the external flange portion 33a. The external flange portion 33a is formed octagonal as a whole in this example, but it can be acceptable if it is shaped into substantially octagonal form, including almost octagonal or deformed octagonal shape.
Also, the female screw 36 formed in at least one part of the above tubular shank 2 extends, in this example, from the second end of the tubular shank 2 toward the first end up to two-thirds of the depth, and does not extend till the first edge of the shank 2. In this way, there is a slight space S formed between the bottom end of the female screw 36 of the female screw portion 35 and the above internal flange portion 33b.
The exposed outer surface of the internal flange portion 33b is formed to have substantially concentric circles, being concave-convex-ring shaped (or ring shaped), as shown in FIG. 1 (a)(b). The surface may be formed to be flat as shown in Fig. 3 (a), to be convex-shaped having an outward protrusion as shown in Fig. 3 (b), or to be concave-shaped having an inward depression as shown in Fig.3(c).
Also, the T nut of the present invention can have the constitution in which the above exposed outer surface of the internal flange portion 33b and the exposed outer surface of the external flange portion 33a are formed have substantially concentric circles of a ring shape, concave-convex-ring shaped, or concave-shape. The preferable depth, width and configuration (i.e. size) for the ring-shape, the concave-convex shape and the concave-shape are shown in Fig. 1, but these is not particularly limited thereto, and other depths, widths and configurations can be acceptable.
The grooves formed in the exposed outer surface as shown in Fig. 1 (a)(b) in a concave-convex shape can cause corrosion of the outer surface due to contaminations or chemicals deposited therein according to use conditions, and provide a poor appearance. The flat surface as shown in Fig. 3(a) or the convex surface as shown in Fig. 3(b) can effectively prevent deposit of contaminations or chemicals and provides an excellent appearance.

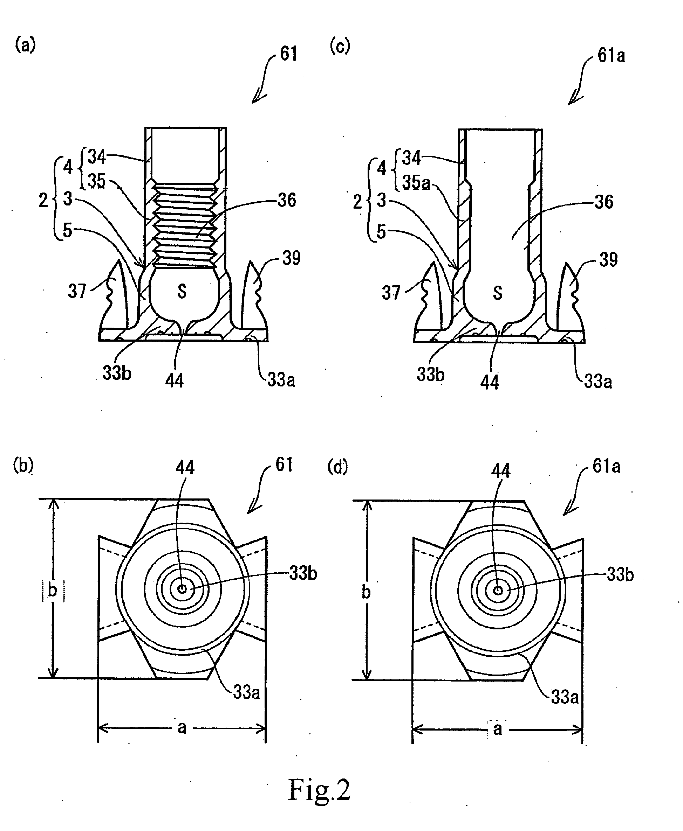

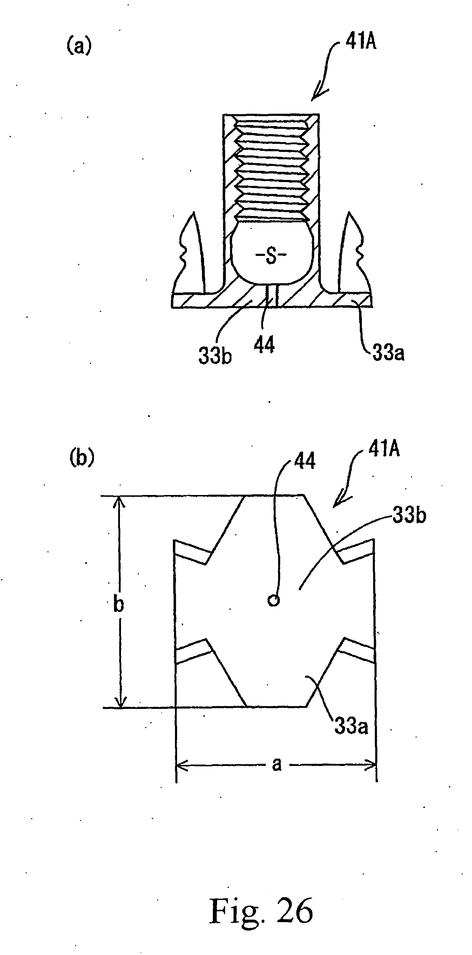

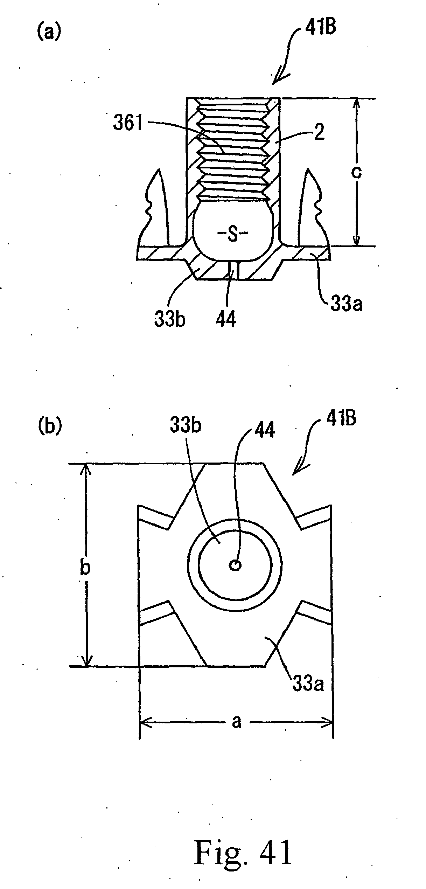

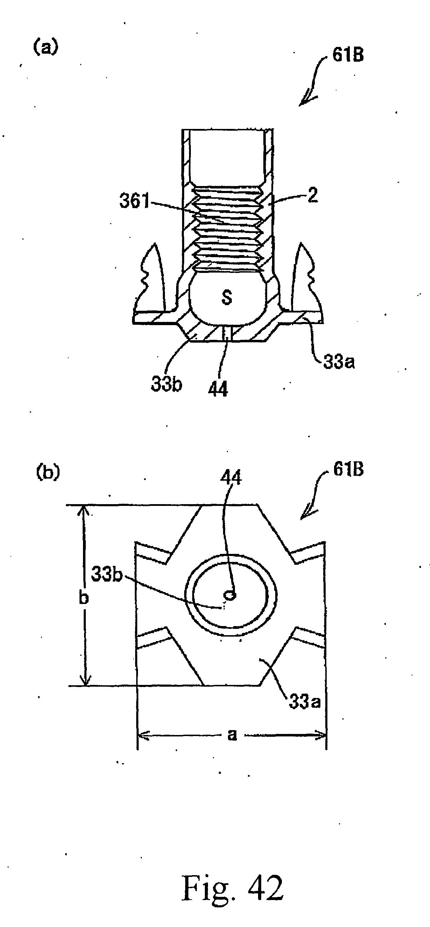

Figs. 26 (a)(b) and 27 (a)(b) show T-nut 41A and T-nut 61A, respectively, in which the exposed outer surface of the internal flange portion 33b is formed flat as shown in Fig. 3 (a). In the T-nut 41 A and T-nut 61 A shown in the above drawings, the structures in which the exposed outer surface of the internal flange portion 33b is not formed flat are not explained here, because they are the same as those shown in Figs. 1 and 2. Figs. 41 (a)(b) and 42 (a)(b) show T-nuts in which the exposed outer surface of the internal flange portion 33b is formed to have a convex as shown in Fig. 3 (b). A T-nut 41B as shown in Figs. 41 (a)(b) has an internal flange portion 33b formed to be convex-shaped having an outward protrusion. Similarly, a T-nut 6 1 B as shown in Figs. 42 (a) (b) has an internal flange portion 33b formed to be convex-shaped having an outward protrusion. Except for the internal flange portion 33b and the length of the shank, the T-nuts shown in Figs. 41 (a)(b) and 42 (a)(b) have the same structures as those shown in Figs. 1 and 2, and the description of those structures has been omitted here.

When the exposed outer surface of the internal flange portion 33b is formed to have a convex surface as above discussed, the same space S or substantially same space S as that of the T-nuts 41, 61 as shown in Figs. 1 and 2 can be displaced from the position of the space S of the T-nut 41 shown in Fig. 1 to the portion closer to the internal flange portion 33b, as shown in Fig. 41 (a) and Fig. 42 (b).

Therefore, the T-nuts 41B and 61B, as shown in Figs. 41 (a) an 42 (a), have a female screw 361 with the same effective number of the thread as that of the female screw 36, as shown in Figs. 1 and 2, formed toward the space S. Even when the length c of the shank 2 is reduced compared with the length as shown in Figs. 1 and 2, the T-nut 41B having the same effective number of the threads as that of the T-nut 41 shown in Fig. 1 can be formed. The amount of material for the shank can be reduced as the length of the shank is reduced, saving the cost.

As shown in FIG. 3(d), in case where an intermediate member 19a, in which a T-nut is driven therein, is covered with and fixed to an another plate member by use of a bolt, and in case where the plate member to be covered is soft, it is acceptable to use the convex-shaped T-nut 4 1 B as shown in FIG. 3(b). However, if the covering plate member is made of a hard material, a gap is defectively created. Thus, in such cases, it is preferable to use the T-nut 41 having the convex-concave ring shape (grooves) as shown in Figs. 1 and 2 or the T-nut 41A having the flat-shape as shown in Figs. 3 (a) and 26.

The T-nut 61 as shown in Figs. 2(a)(b) is different from the T-nut 41 as shown in Fig. 1 in that it includes a shank 2 which has a stepped portion 3 formed at a given position thereof, and a to-be-caulked portion 34 formed in a hollow-cylindrical upper portion 4 thereof. The elements common to those of the T-nut 41 are defined by the same reference numbers, and the detailed description is omitted.

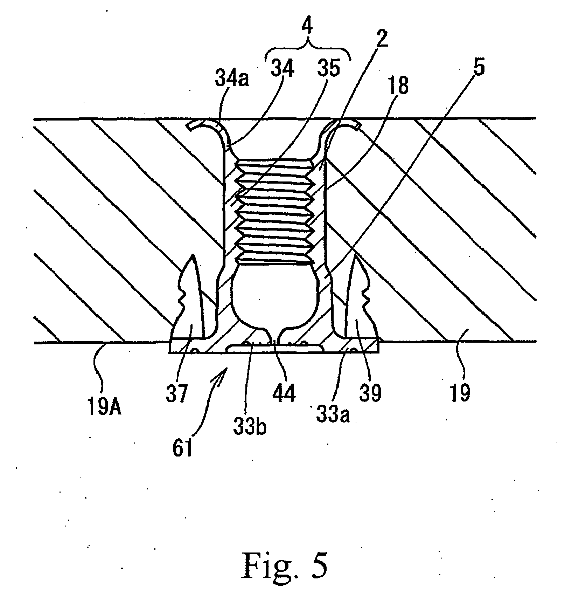

The manner of the use of the above T-nut 61 is explained. In the fixing operation of the T-nut 61, for example as shown in Fig. 5, the shank 2 of the T-nut 61 is inserted into a through hole 18 of a fixing object 19 such as a wooden board, and then the to-be-caulked portion 34 is caulked by a caulking machine to form a caulked portion 34a on one side of the fixing object 19. Simultaneously, claws 37 to 40 are driven to bite into the opposite side of the fixing object 19.

In the embodiment illustrated in Fig 5, the through hole 18 of the fixing object 19 is arranged to have an inner diameter approximately equal to the outer diameter of the hollow-cylindrical upper portion 4, and the enlarged tubular bottom portion 5 is adapted to be press-fitted into the through hole 18 as the T-nut 61 is driven into the fixing object 19. Thus, the T-nut 61 can be firmly fixed to the fixing object 19 through the press-fitted enlarged tubular bottom portion 5 without gap generated between the outer periphery of the hollow-cylindrical upper portion 4 and the inner periphery of the through-hole 18.

Next, an operation of applying paint onto the surface of the fixing object 19 in which the T-nut 61 is driven therein is explained.

In order to subject the one side surface 19A of the fixing objective 19 in which the T-nut 61 is driven therein as shown in Fig. 5 to a surface treatment, for example, paint is sprayed onto the surface. During the spray, while the paint is sprayed not only onto the side surface 19A of the fixing object 19 but also onto the external flange 33a and the internal flange 33b of the T-nut 61, it seldom enters the inside of the shank 2 from a hole 44 formed at the vicinity of the center portion of the internal flange 33b because the size of the opening portion of the hole is small. Thus, there is no need for removing the paint from the inside of the shank in the subsequent process, improving the operation efficiency. Also, when the side surface 19A of the fixing object 19 is immersed into an oil, a little amount of oil can enter the inside of the shank 2 from the hole 44. However in this case, the oil entering and attached to the inside surface of the shank 2 serves as a lubricant, and a bolt can be smoothly screwed into the shank 2.

Next, various modifications of the external flange portion 33a is described.

While the respective external flanges 33a of the T-nuts 41 and 61, as shown in Figs. 1 (a)(b), Figs. 2 (a) (b) and Figs. 4 (a)(b) are formed in an orthogonal shape, the two orthogonal lengths a, b can be set to satisfy any one of the following formulas:

$$a < b, a = b$$

and

$$a > b.$$

Further, as shown by a T-nut 51 of Fig. 4 (c), the external flange portion 33a can be formed into a circular shape. Alternatively, the external flange portion can be formed into a square or rectangular shape, and a plurality of claws can be provided at the peripheral edge thereof. A T-nut with such a flange can be obtained by forming an internal flange having a hole around at the center thereof and an external flange portion, at the first end of the shank.

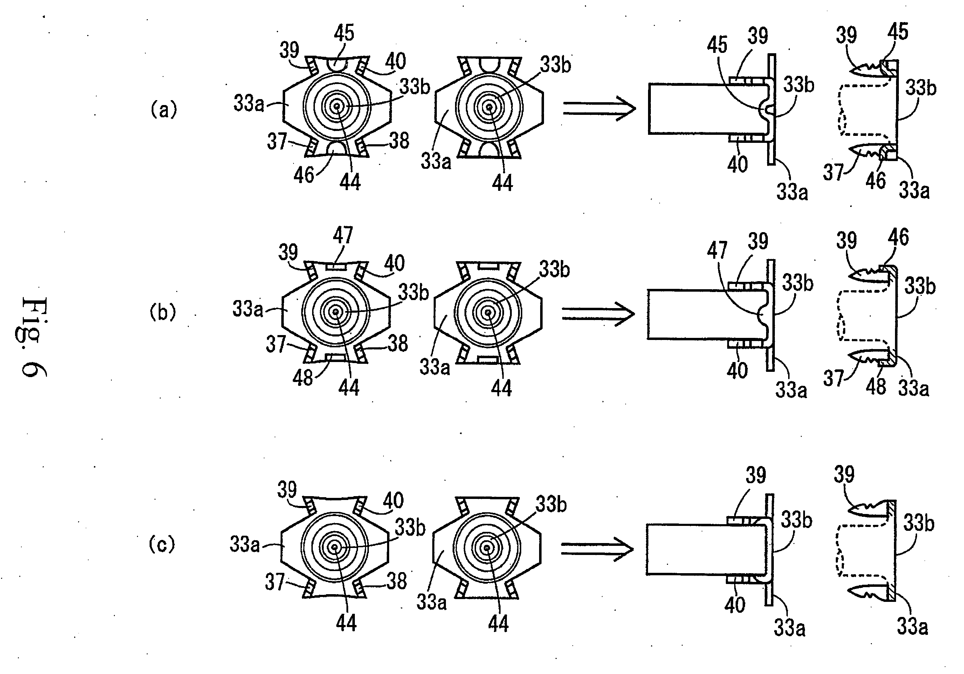

In such a case where the external flange portion 33a is formed in an approximately octagonal shape as described above, the embodiment having four claws 37, 38, 39 and 40 is possible, but it is also possible to adapt an embodiment having protrusions 45, 46 which are plastically deformed to protrude toward the second end, as shown in Fig. 6 (a) or an embodiment having spatula-shaped protrusions 47, 48, as shown in Fig. 6 (b). Here, the embodiment shown in Fig. 6 (c) is provided with only four claws 37, 38, 39 and 40.

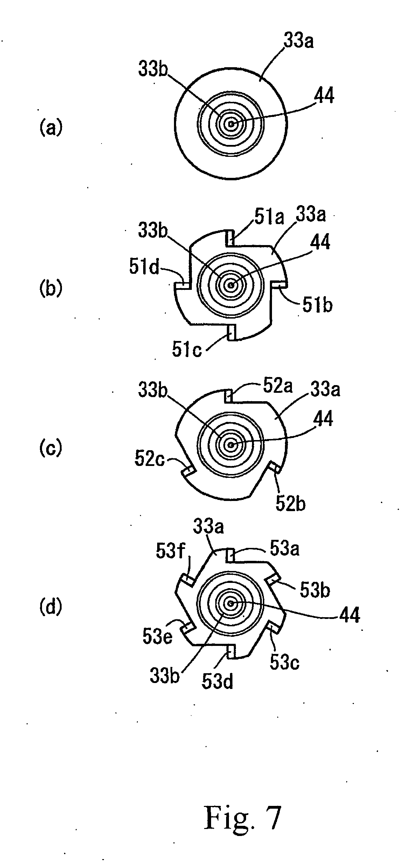

Also, when the external flange 3 3 a has a circular shape, it can be provided with no claws as shown in Fig. 7 (a), four claws 51a, 51b, 51c, 51d as shown in Fig. 7 (b), three claws 52a, 52b, 52c, 52d as shown in Fig. 7 (c) or six claws 53a, 53b, 53c, 53d, 53e, 53f as shown in Fig. 7 (d). In any case, a T-nut has an internal flange portion 33b arranged with a hole 44 at the center, approximately, in the bottom of the shank 2.

Each T-nut 41 a, 61a in another embodiment according to the present invention which is shown in Figs. 1 (c)(d) or Figs. 2 (c)(d) is different from the T-nuts 41, 61 shown in Figs. 1 (a)(b) or Figs. 2 (a)(b) in that it is does not have a female screw formed in the shank 2. Thus, each T-nut 41a, 61a in this example has a female screw portion 35a for screwing a bolt in the shank 2 without having a female screw formed therein. In the female screw portion 35a for screwing a bolt, the bolt is screwed and mounted into the inside of the above female screw portion 35a for screwing a bolt by fixing each T-nut 41a, 61a into the fixing object and screwing the bolt into the inside of the shank. The other elements of each T-nut 41 a, 61 a are the same as those described for the T-nuts 41, 61. The common elements are defined by the same reference numerals, and their detailed description is omitted.

T-nuts as shown in Figs. 1 (c)(d) and Figs. 2 (c)(d) are examples of T-nuts without the female screw in the shank 2. Although elements are not shown for various T-nuts having a female screw as shown in the accompanying drawings, it is needless to say that a T-nut without the female screw in the shank is also a T-nut having a female screw portion for screwing a bolt of the present invention.

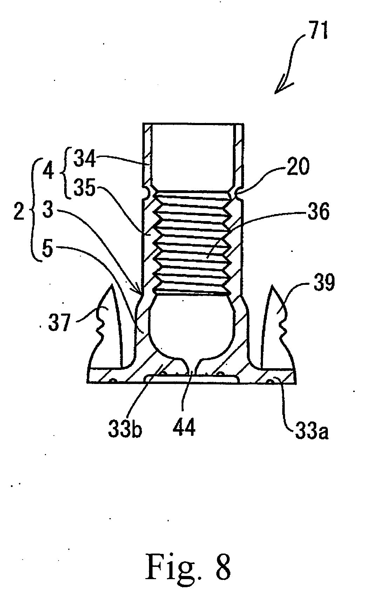

With reference to Fig. 8, a T-nut 71 of another embodiment is described, wherein the T-nut includes a shank 2 having an outer surface formed with a groove. The T-nut 71 of this embodiment is characterized in that an annular groove 20 is provided over the outer surface of the shank 2 in the vicinity of the boundary between the to-be-caulked portion 34 and the female screw portion 35. The groove 20 can have a cross sectional shape such as a semicircular-shape, a U-shape or V-shape, and the cross sectional shape is appropriately selected depending on the material of the T-nut, and a machining characteristic or a mechanical characteristic, such as tensile strength.

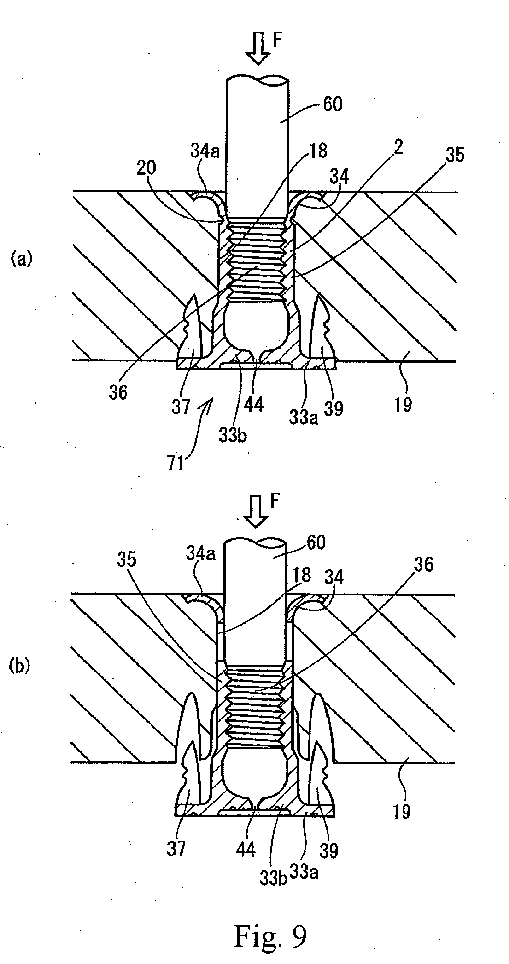

As shown in Fig. 9 (a), in the T-nut 71 according to the present embodiment having constructed as above, the shank 2 is first inserted into a hole-through 18 which is formed in a fixing object 19 such as a resin material or wooden board, and then the to-be-caulked portion 34 is caulked by a caulking machine to form a caulked portion 34a on the one surface side of the fixing object 19. Simultaneously, the claws 37 to 40 are driven to bite into the opposite surface of the fixing object 19 to firmly fix the T-nut 71 to the fixing object 19.

When a fixing object 19 becomes one component of a product, the fixing object 19 is fixed to another material such that in a state where the T-nut 71 is caulked, the female screw 36 of the female screw portion 35 is engaged with a bolt (not shown). In the state after fastening the bolt to the female screw in the female screw portion 3, the fastening force of the bolt mainly acts as a compressive force against the female screw portion 35, and thereby no excessive tensile stress is usually generated in the shank 2 of the T-nut 71. Thus, the fixing strength is not substantially degraded by a reduction in the strength of the shank 2 due to the presence of the groove 20.

With reference to Fig. 9, described below is an operation of separating the T-nut 71 from the fixing object 19 to collect it for the purpose of recycling after the use or lifetime of the product which is constituted of the fixing object 19 with the T-nut caulked and fixed thereto.

As shown in Fig. 9 (a), the lower end of a columnar jig 60 having an outer diameter slightly larger than the inner diameter of the to-be-caulked portion 34 before its caulking operation is press-fitted from the side of the caulked portion 34a of the T-nut 71. Then, a force F as shown in Fig. 9 (a) is applied to the jig 60 by hammering the upper end of the jig 60 while keeping the lower end of the jig 60 in contact with a stepped portion at the boundary between the to-be-caulked portion 34 and the female screw portion 35. This force F causes stress concentration at a position of the outer peripheral surface of the shank having the thinnest wall where a groove is formed at the boundary between the to-be-caulked portion 34 and the female screw portion 35, so as to generate a large tensile stress. Thus, the shank is broken at the groove 20, and divided into two pieces as shown in Fig. 9 (b). Then, the lower end of the jig 60 pushes the lower half of the T-nut 71 including the female screw portion 35, the external flange portion 33a and the internal flange portion 33b downward to detach the lower half of the T-nut 71 from the fixing object 19. During an operation of pulling out the jig 60 upward, the upper half of the T-nut 71 is detached from the through-hole 18 of the fixing object 19 while being fitted in the jig 60.

As above, the T-nut 71 according to this embodiment of the present invention can be readily detached from the fixing object 19. Thus, after the use of the product with the T-nut 71 caulked and fixed thereto, the fixing object 19 constituting the product can be readily separated and collected, which facilitates the recycle use of the fixing object 19.

The type of shape of the shank 2 is described below.

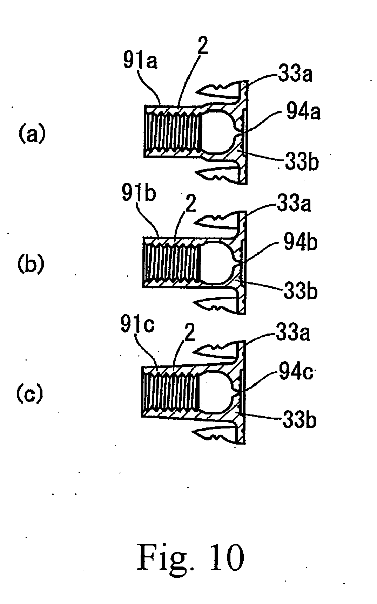

Fig. 10 shows T-nuts of a type having no to-be-caulked portion. Specifically, Fig. 10 (a) is a cross sectional side view showing a step barrel type T-nut 91a having a stepped portion, Fig. 10 (b) is a cross sectional side view showing a straight barrel type T-nut 91b having no stepped portion, and Fig. 10 (c) is a cross sectional side view showing a taper barrel type T-nut 91 c in which the outer peripheral surface of the shank has a shape gradually expanding toward the external flange portion 33a (the first end). In each type, the internal flange portion 33b has a hole 94a, 94b, 94c at a neighborhood of its central part.

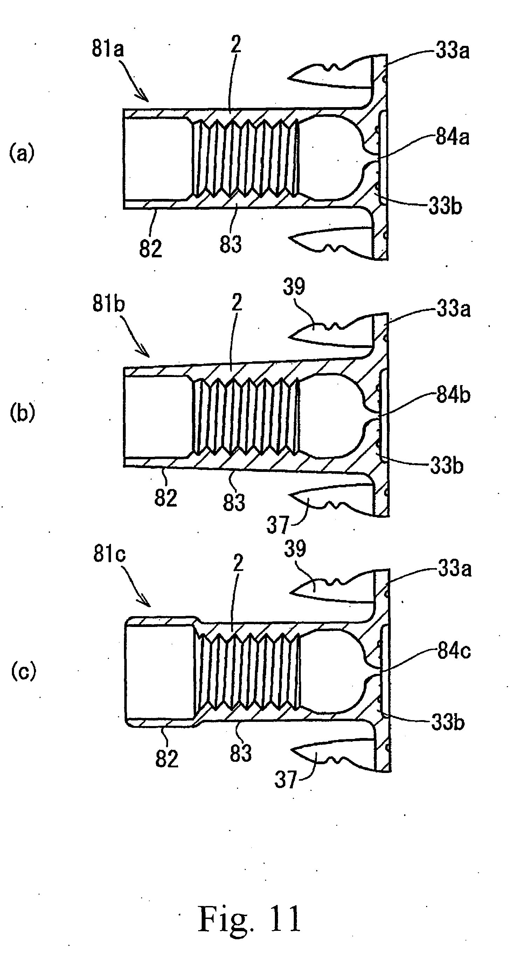

Fig. 11 shows T-nuts of a type having a to-be-caulked portion. Specifically, Fig. 11 (a) is a cross sectional side view showing a step barrel type T-nut 81 a having a stepped portion, Fig. 11 (b) is a cross sectional side view showing a taper barrel type T-nut 81 b in which the outer peripheral surface of the shank has a shape gradually expanding toward the external flange portion 33a (the first end). Fig. 11 (c) is a cross sectional side view showing a top-broad barrel type T-nut 81c in which the to-be-caulked portion has outer and inner diameters greater that those of the female screw portion 83. In each type, the internal flange portion 33b has a hole 84a, 84b, 84c in the vicinity of the central part thereof.

In view of the above types, the T-nut as shown in Fig. 1 (a) is classified in a straight barrel type in which no stepped portion is formed at a given position of the to-be-caulked portion 34 and the shank 2, the T-nut as shown in Fig. 2 (a) is classified in a step barrel type in which a stepped portion is formed at a given position of the to-be-caulked portion 34 and the shank 2.

The taper barrel type T-nut 81b shown in Fig. 11 (b) is similar to the T-nut 61 shown in Fig. 2 except for that the outer peripheral surface of the shank 2 is tapered. Thus, the same constitutional elements as those of the T-nut 61 in Fig. 2 are defined by the same reference numerals, and their description will be omitted.

The T-nut 81b of this type is different from the above T-nut 61 in that the outer peripheral surface has a tapered shape gradually expanding form the to-be-caulked portion or the female screw portion 83 to the vicinity of the external flange portion 33a.

In the T-nut 81b of this type, if the diameter of a prepared hole of a board as a fixing object is set approximately the same as the outer diameter of the to-be-caulked portion 82 or the female screw portion 83, the region extending from the female screw portion 83 to the external flange 33a is pressed and fixed to the prepared hole as the T-nut is driven into the board. The T-nut is reliably fixed to the board resulted in an anti-rotational function. In addition, the to-be-caulked portion 82 can be caulked to fix the T-nut to the board, and the claws 37, 39 can be driven to bite into the board to provide an additional anti-rotation function.

With reference to Fig. 11 (c), the aforementioned top-broad barrel type T-nut 81c is described in more detail.

The T-nut 81c of this type is analogous to the T-nut 61 as shown in Fig. 2 in that it is a socalled rivet type T-nut which is based on the invention disclosed in U.S. Patent No. 5,618,144. In Fig. 11 (c), the same constitutional elements as those of the T-nut 61 in Fig. 2 are defined by the same reference numerals, and their description is omitted.

The T-nut 81 c of the type is different from the T-nut 61 in that a to-be-caulked portion 82 has an inner diameter greater than that of the female screw portion 83, and an outer diameter greater than that of the female screw portion 83.

In the T-nut 81c of the type, the diameter of a prepared hole of a board as a fixing object must be set greater than at least the outer diameter of the to-be-caulked portion 82. While a certain gap is formed between the female screw portion 83 and the inner periphery of the prepared hole after the T-nut is driven into the board, the to-be-caulked portion 82 can be caulked to fix the T-nut to the board, and the claws 37, 39 can be driven to bite into the board to provide an anti-rotational function.

In each of the above T-nuts, the wall thickness of the to-be-caulked portion can be set equal to that of the female screw portion, or can be set less than that of the female screw portion to facilitate the caulking operation.

Various T-nuts having different shapes of the outer peripheral surface of the shank which extend from the female screw portion to the vicinity of the external flange portion 33a are described.

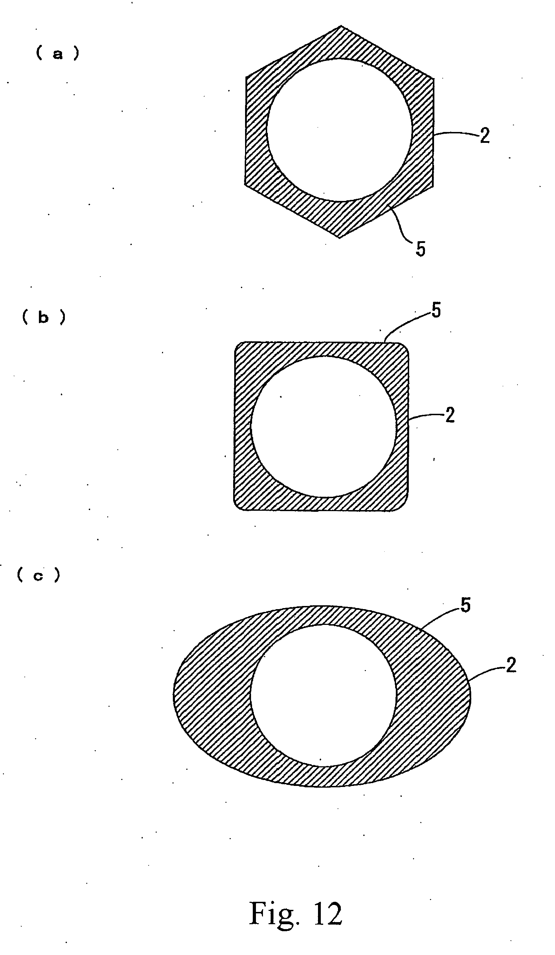

In one T-nut, the shank can be provided with a stepped portion. In this case, a resulted enlarged lower portion extending from the stepped portion to the external flange portion can have a polygonal shape, such as an octagonal shape (Fig. 12 (a)), or a square shape (Fig. 12 (b)), or a non-circular shape such as an oval shape (Fig. 12 (c)), instead of a hollow cylindrical shape, when viewing in the axial direction of the shank. The T-nut with the above structure is driven into a through hole of a board having approximately the same diameter as that of the hollow-cylindrical upper portion, so that the non-circular enlarged tubular lower portion 5 can be press-fitted into the through-hole and bitten into the board to provide an anti-rotational function. Thus, even if the external flange portion 33a has a flat circular disc shape having no claws, the T-nut can be reliably fixed to the board without any rotational movement in its fixed state.

In each of the aforementioned T-nuts, such as T-nut 61, according to the aforementioned embodiments of the present invention, the stepped portion is formed over the circumference of the outer peripheral surface of the shank. However, if the enlarged tubular lower portion is formed to prevent the rotation in the fixed state as in this embodiment, it is not essential to form the stepped portion over the circumference of the outer peripheral surface of the shank. More specifically, if the enlarged tubular lower portion extending from the stepped portion toward the external flange portion 33a is formed with a stepped portion in at least a part of the outer periphery of the enlarged tubular lower portion, and the stepped portion has a diameter greater than that of the hollow-cylindrical upper portion 4, the stepped portion can prevent the rotation in the fixed state.

Various modifications of the T-nuts of the present invention have been described as above. These modifications are classified into types, and each of the types is described with reference to drawings.

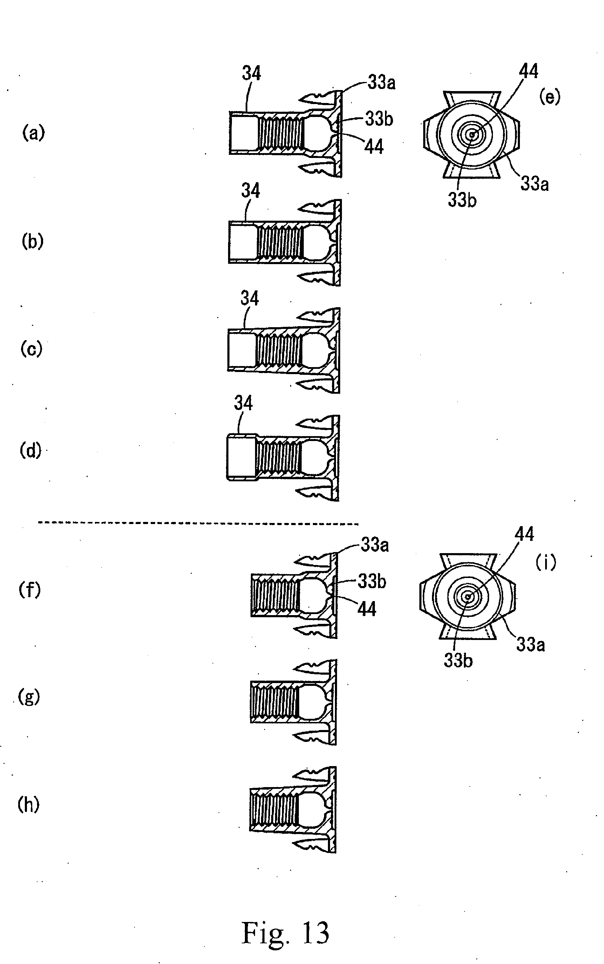

Fig. 13 shows a T-nut of a type in which the external flange portion 33a fundamentally has an octagonal shape. Fig. 13 (a) is a cross sectional side view showing a step barrel type with a to-be-caulked portion 34, Fig. 13 (b) is a cross sectional side view showing a straight barrel type with a to-be-caulked portion 34, Fig. 13 (c) is a cross sectional side view showing a taper barrel type with a to-be-caulked portion 34, Fig. 13 (d) is a cross sectional side view showing a top-broad barrel type with a to-be-caulked portion 34, and Fig. 13 (e) is a bottom view of the external flange portion 33a and the internal flange portion 33b of these T-nuts. Further, Fig. 13 (f) is a cross sectional side view showing a step barrel type without to-be-caulked portion, Fig. 13 (g) is a cross sectional side view showing a straight barrel type without to-be-caulked portion, Fig. 13 (h) is a cross sectional side view showing a taper barrel type without to-be-caulked portion, and Fig. 13 (i) is a bottom view of the external flange portion 33a and the internal flange portion 33b of these T-nuts.

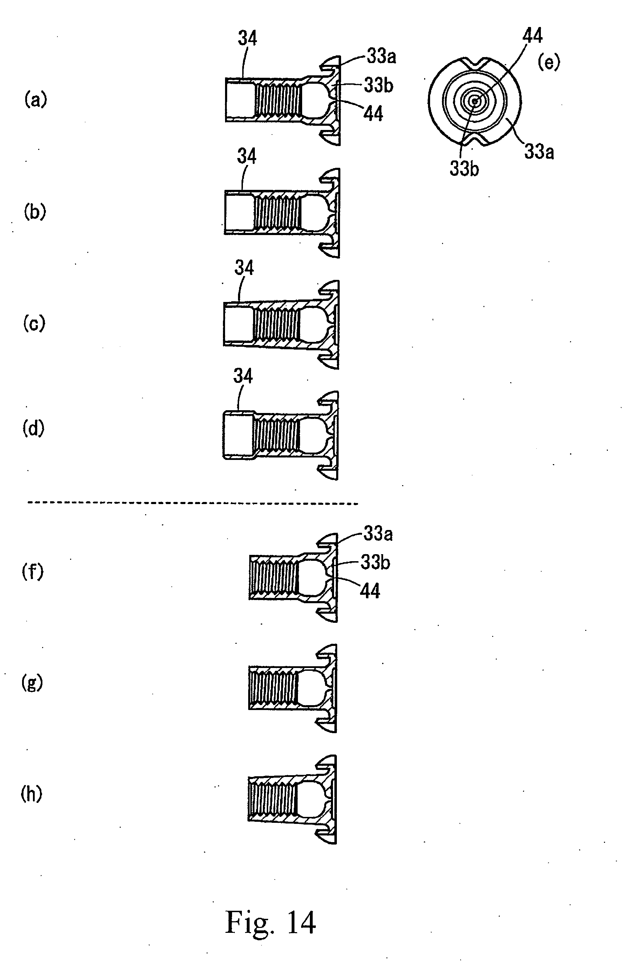

Fig. 14 shows a T-nut of a type in which the external flange portion 33a fundamentally has a circular shape and claws are formed through a plastic deformation process. Fig. 14 (a) is a cross sectional side view showing a step barrel type with a to-be-caulked portion 34, Fig. 14 (b) is a cross sectional side view showing a straight barrel type with a to-be-caulked portion 34, Fig. 14 (c) is a cross sectional side view showing a taper barrel type with a to-be-caulked portion 34, and Fig. 14 (d) is a cross sectional side view showing a top-broad barrel type with a to-be-caulked portion 34. Also, Fig. 14 (f) is a cross sectional side view showing a step barrel type without to-be-caulked portion, Fig. 14. (g) is a cross sectional side view showing a straight barrel type without to-be-caulked portion, and Fig. 14 (h) is a cross sectional side view showing a taper barrel type without to-be-caulked portion. Fig. 14 (e) is a bottom view of the external flange portion 33a and the internal flange portion 33b of these T-nuts.

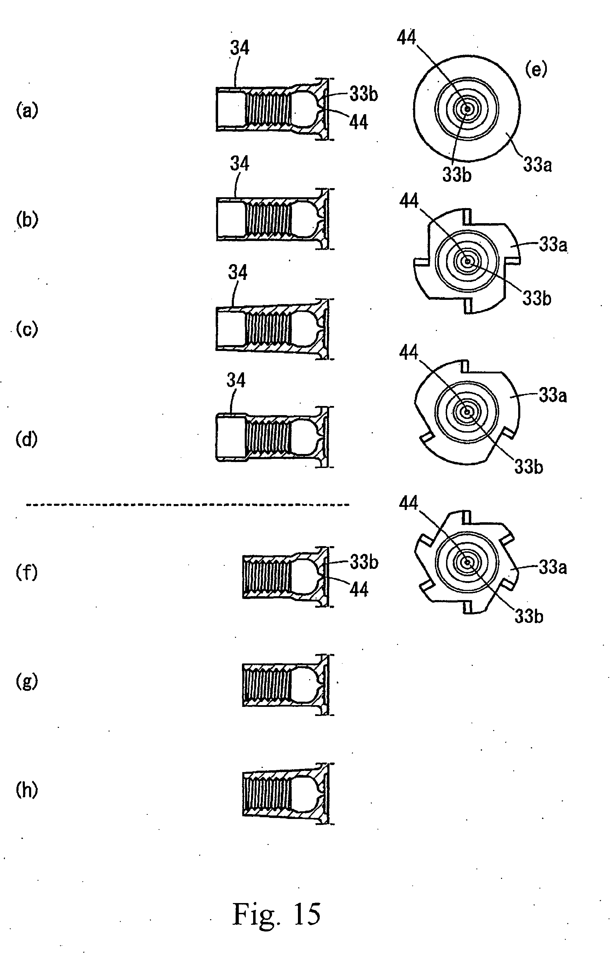

Fig. 15 shows a T-nut of a type in which the external flange 33a fundamentally has a circular shape and claws are formed through a notching/bending process. Fig. 15 (a) is a cross sectional side view showing a step barrel type with a to-be-caulked portion 34, Fig. 15 (b) is a cross sectional side view showing a straight barrel type with a to-be-caulked portion 34, Fig. 15 (c) is a cross sectional side view showing a taper barrel type with a to-be-caulked portion 34, and Fig. 15 (d) is a cross sectional side view showing a top-broad barrel type with a to-be-caulked portion 34. Also, Fig. 15 (f) is a cross sectional side view showing a step barrel type without to-be-caulked portion, Fig. 15 (g) is a cross sectional side view showing a straight barrel type without to-be-caulked portion, and Fig. 15 (h) is a cross sectional side view showing a taper barrel type without to-be-caulked portion. Fig. 15 (e) is a bottom view of the external flange portion 33a and the internal flange portion 33b of these T-nuts. The detail of Fig. 15 (e) is the same as that described in connection with Fig. 7, and its description is omitted herein.

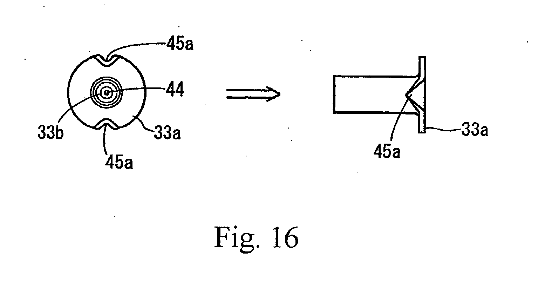

Fig. 16 is a bottom view and a side view of a T-nut of a type in which the external flange portion 33a fundamentally has a circular shape, and the claws 45a are formed through a plastic deformation process.

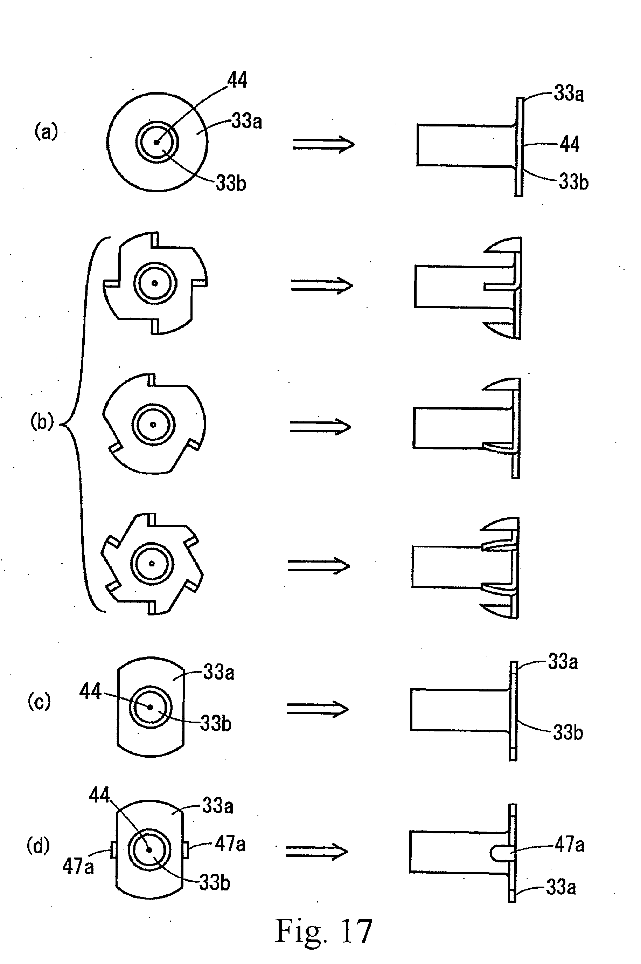

Fig. 17 (a) is a bottom view and a side view of a T-nut of a type in which the external flange portion 33a fundamentally has a circular shape, and Fig. 17 (b) is a bottom view and a side view of a T-nut of a type in which 3 to 6 claws are additionally formed through a bending process. Fig. 17 (c) is a bottom view and a side view of a T-nut of a type in which the external flange has a shape define by two arcs and parallel lines, and Fig. 17 (d) is a bottom view and a side view of a T-nut in which 2 claws are additionally formed.

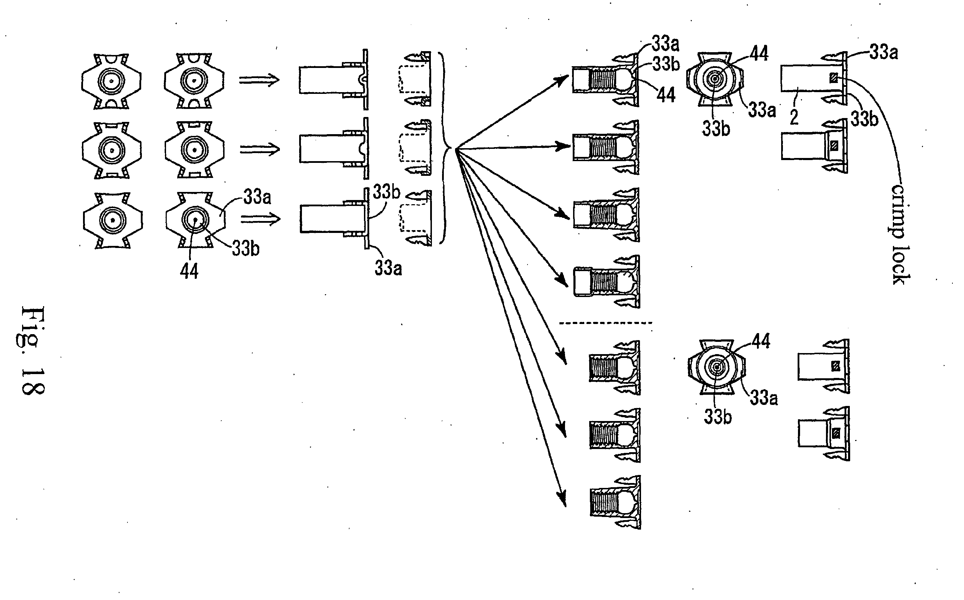

Fig. 18 is an explanatory view of T-nuts in various combinations of each of the barrel type T-nuts and claws, in which their flange fundamentally has an octagonal shape. Each of the T-nuts has crimp locks formed in the side surface of the shank 2.

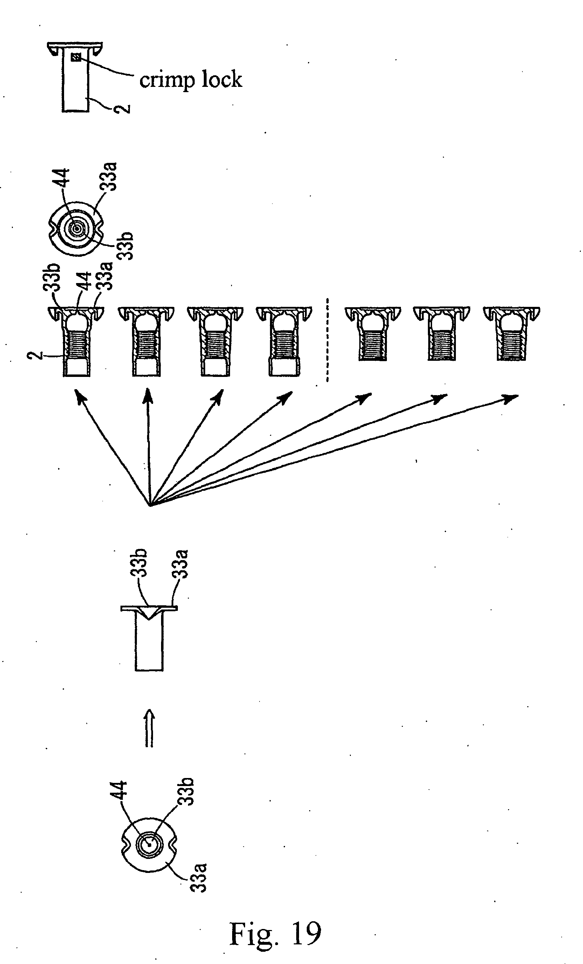

Fig. 19 is an explanatory view of each of the barrel type T-nuts, in which the external flange fundamentally has a circular shape. Each of the T-nuts has crimp locks formed in the side surface of the shank 2.

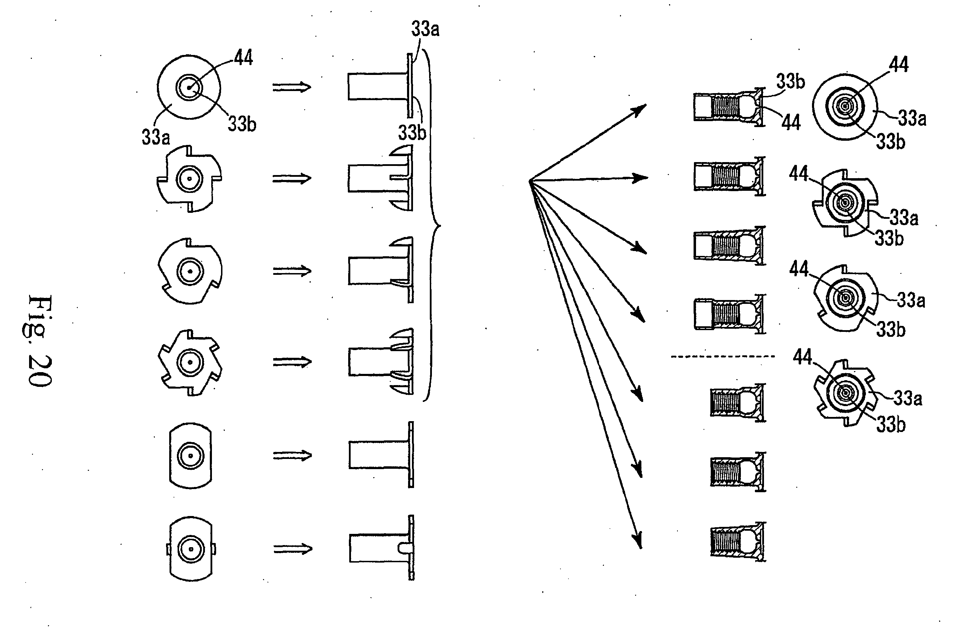

Fig. 20 is an explanatory view of T-nuts in combinations of fundamentally circular external flange and each of the barrel type T-nuts.

A method of forming claws in an external flange is described hereinafter referring to an example.

In the T-nuts 41, 61 as shown in Figs. 4(a)(b), the four claws 37 to 40 are formed by cutting and bending the outer periphery of the external flange portion 33a. Alternatively, as shown by the T-nut 51 in Fig. 4(c), a part of the outer periphery of the external flange portion 33a can be plastically deformed toward the shank 2. Similar to the T-nut of Fig. 5, in the fixing operation, the T-nut 51 is driven into and press-fixed to the through hole 18 of the fixing object 19 to provide the same effect of that in the T-nut 41.

With reference to Figs. 2 1 (a)(b), a T-nut 111 of another embodiment of the present invention is described. The T-nut 111 is common with the T-nut 41 as shown in Fig. 1 in that it comprises a shank 112 which includes a stepped portion 3, and a hollow-cylindrical upper portion 4 having a to-be-caulked portion 34 and a female screw portion 35, as well as a hole 44 in the vicinity of the center part of the internal flange portion 33b. The T-nut 111 is different from the T-nut 41 in that a pair of approximately triangular protrusions 116 are formed at corresponding positions opposed to each other at 180 degrees in the vicinity of the boundary between the external flange portion 113a and the outer peripheral surface of an enlarged tubular upper portion 115 extending from the stepped portion 3 toward the external flange portion 113a. The protrusions 116 are formed integrally with the enlarged tubular lower portion 115 and the external flange portion 113a. In the fixed state after driving the T-nut into a board, the protrusions 116 can bite into the board to provide an anti-rotational function for the T-nut 111. While the T-nut 111 is provided with the two protrusions 116, the number of the protrusions can be appropriately increased if necessary to enhance the anti-rotational function.

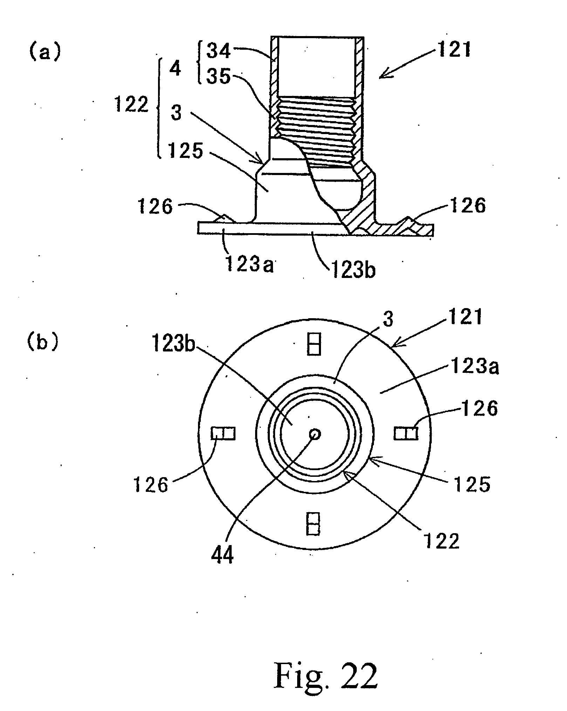

Alternatively, as shown by a T-nut 121 in Figs. 22(a)(b), an enlarged tubular lower portion 125 is formed in a hollow-cylindrical shape as with the T-nut 41, and protrusions 126 as a substitute for the protrusions 116 in the T-nut 111 are formed integrally with the external flange portion 123a by making two parallel notches in a circular disc-shaped external flange portion 123a and pushing the notched portion upward. In this case, the protrusions 126 can provide the same anti-rotational function as that of the protrusions 116 of the T-nut 111. While the T-nut 121 is provided with the four protrusions 126 disposed at even intervals, it is understood that the number or position of the protrusions 126 can be appropriately changed if necessary.

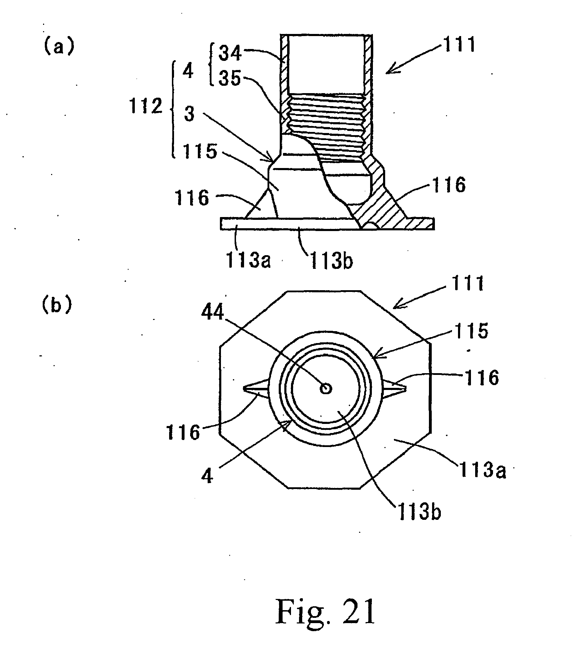

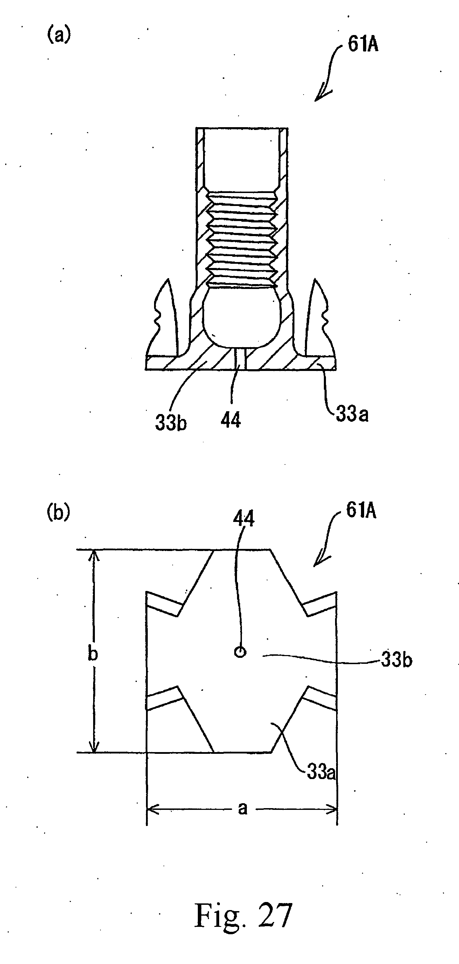

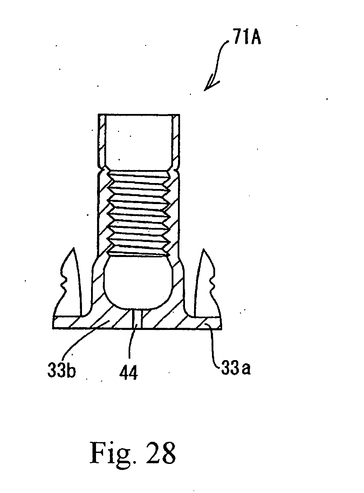

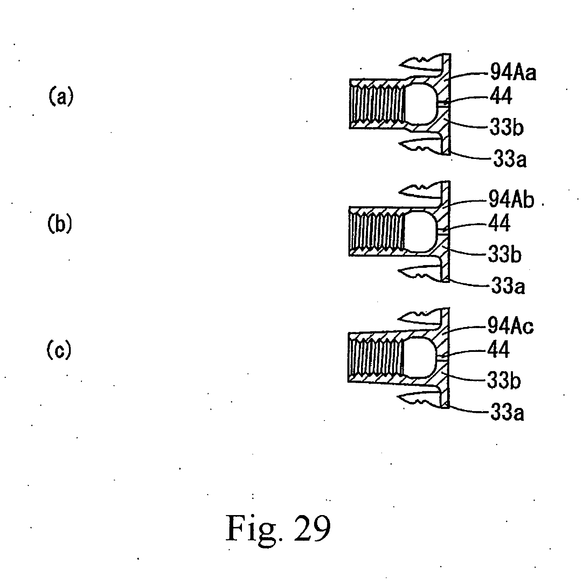

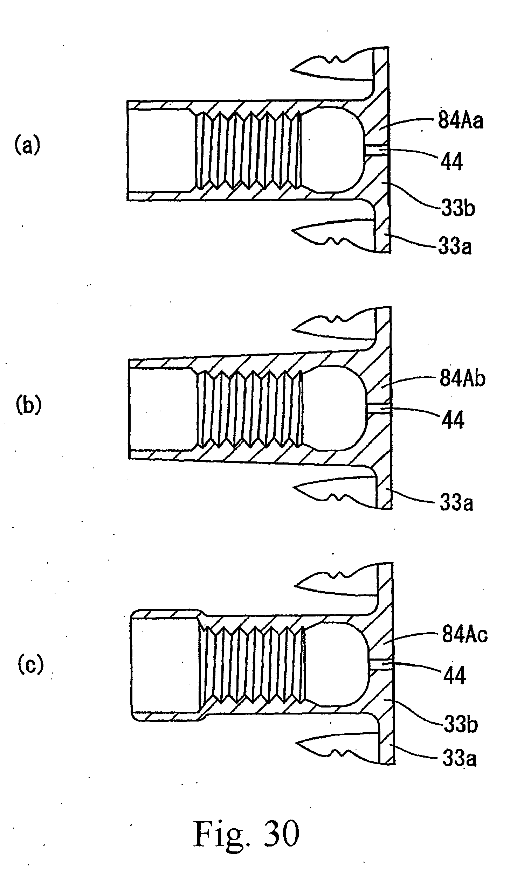

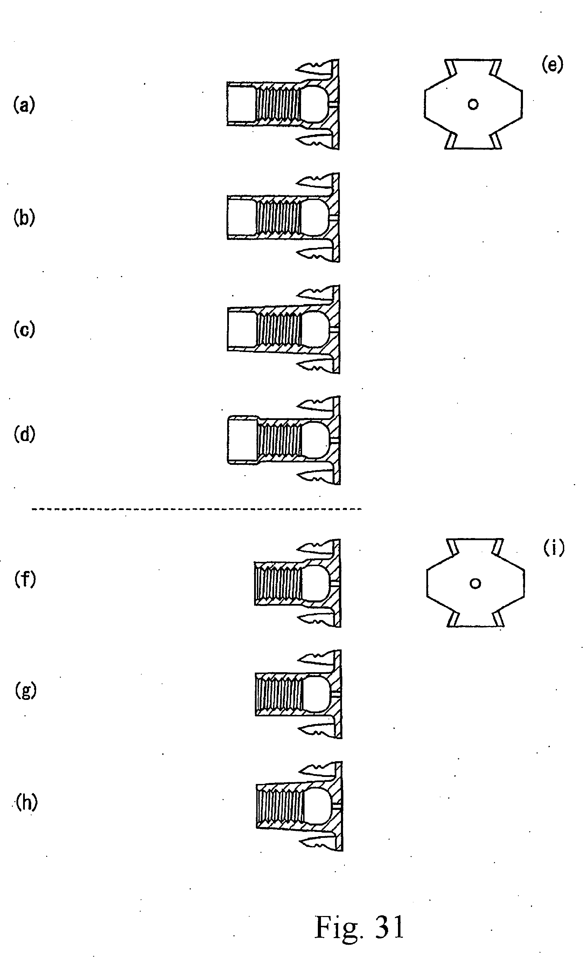

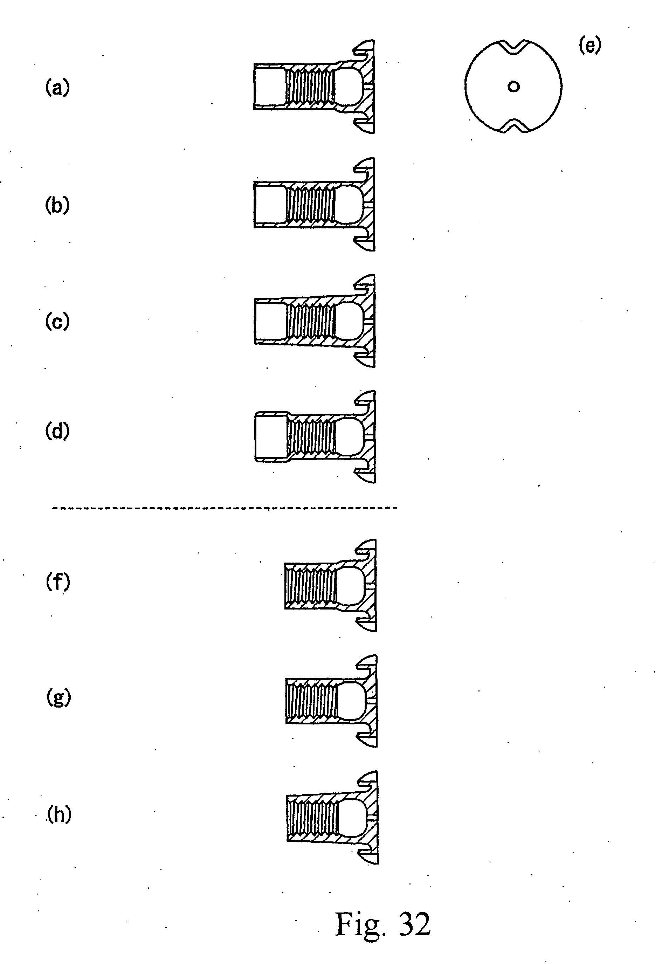

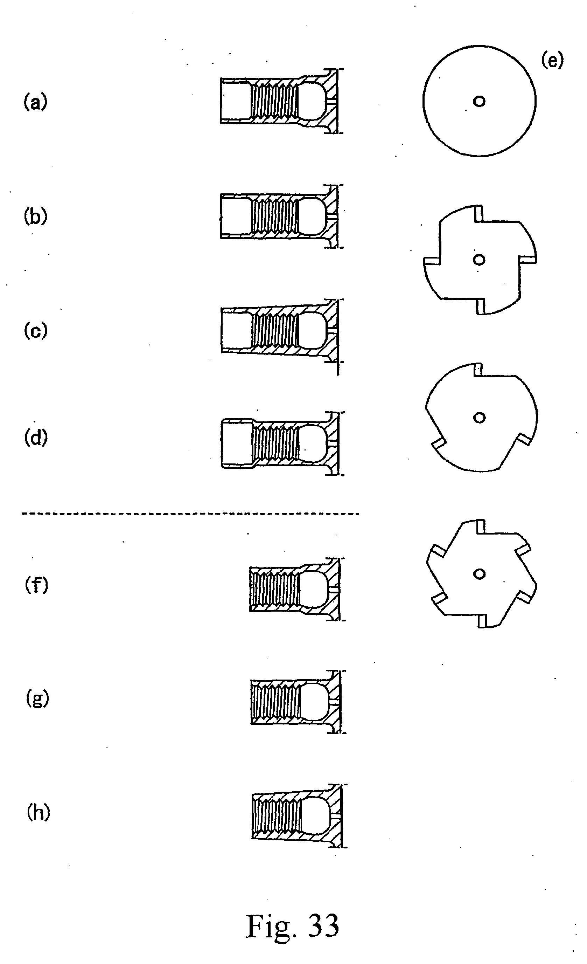

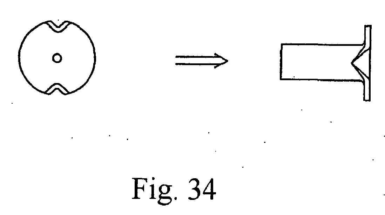

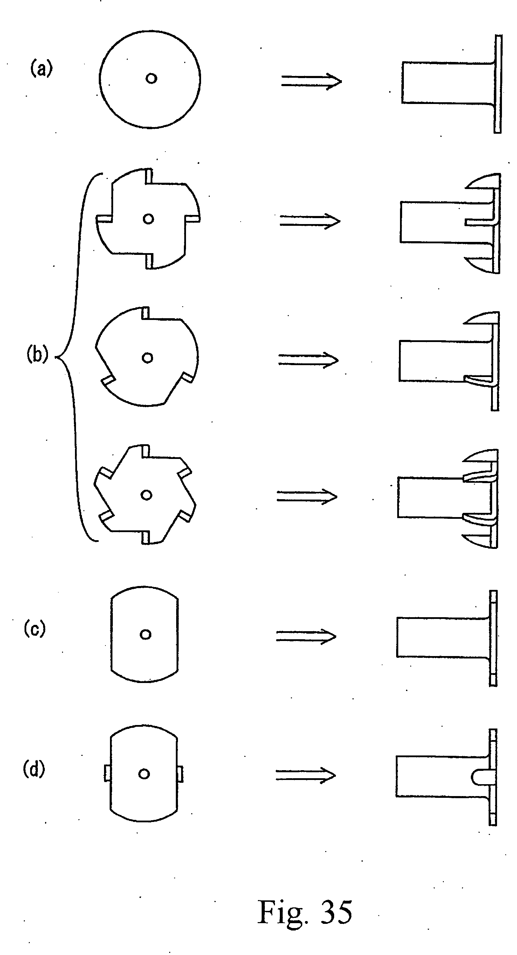

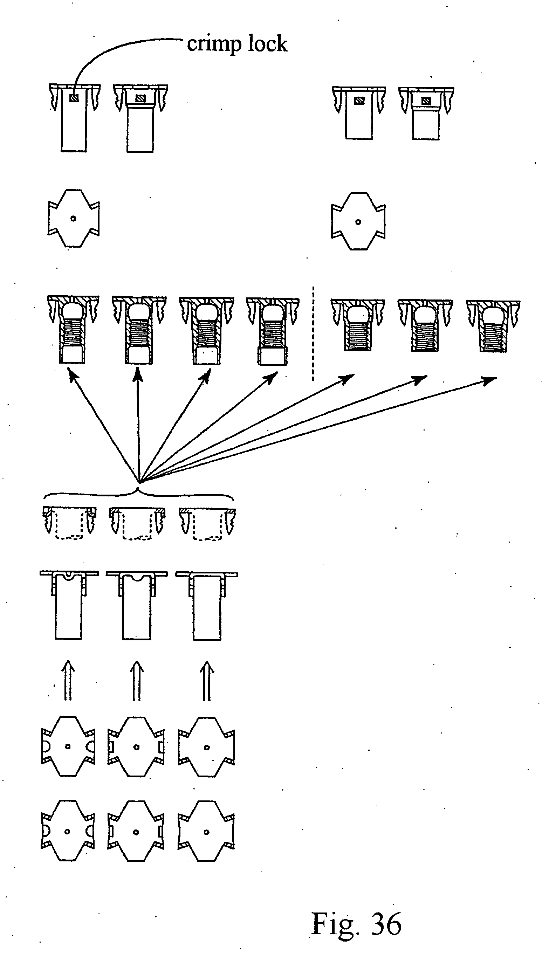

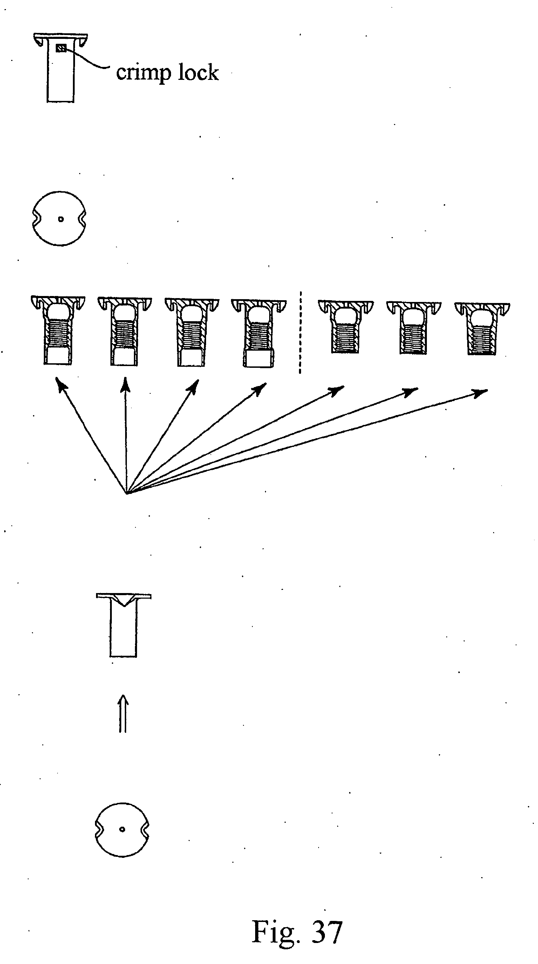

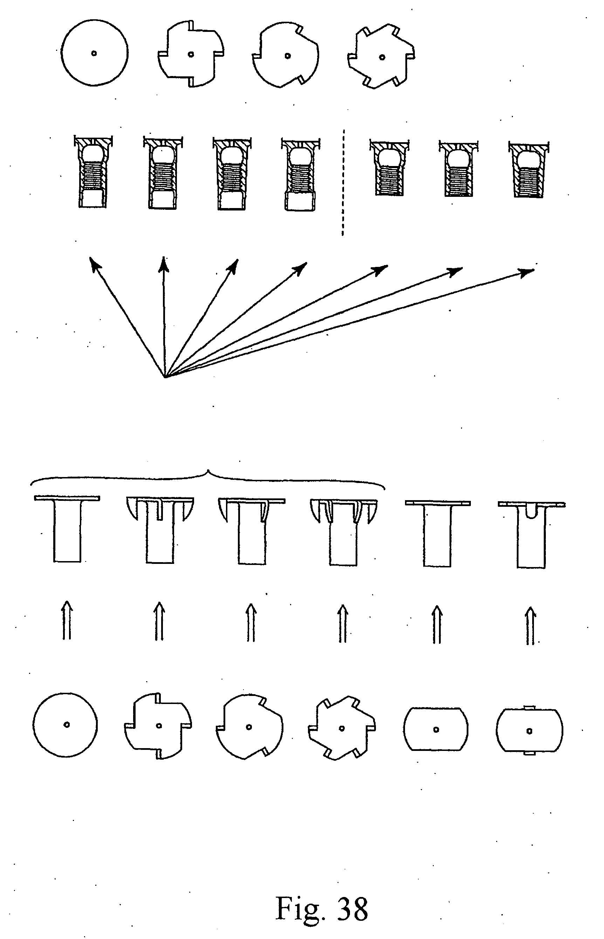

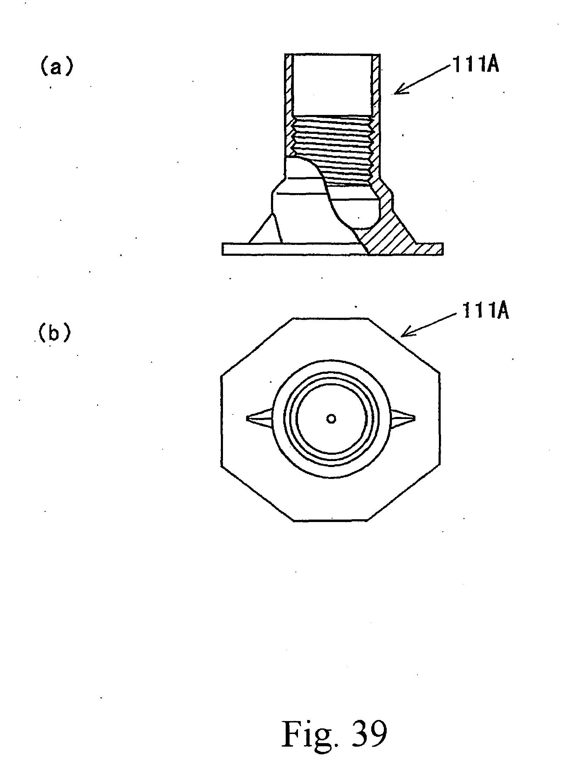

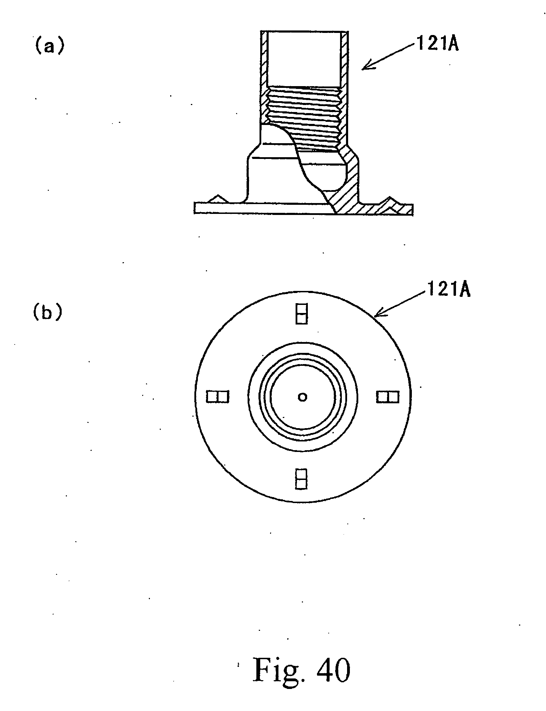

Various types of T-nuts of the present invention in which the exposed outer surface of an internal flange portion of the T-nut is formed as a flat surface are shown in Figs. 26 to 40. As shown in Figs. 26 to 40, when the exposed outer surface of the internal flange portion of the T-nut is formed as a flat surface, the exposed outer surface becomes flat without ring shape or concave-convex shape in the sectional side view, and no concentric circular pattern appears in the bottom view. The T-nuts in Figs. 26 to 40 are different from the T-nuts in Figs. 1 to 22 simply in terms of the shape of the exposed outer surface of the external flange portion 33a and the internal flange portion 33b, but the shapes and functions of the remaining components or elements are the same, and their description is omitted.

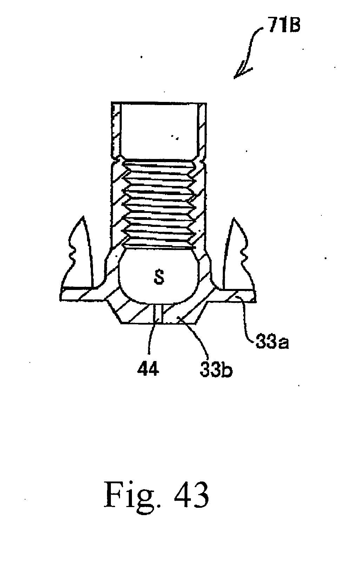

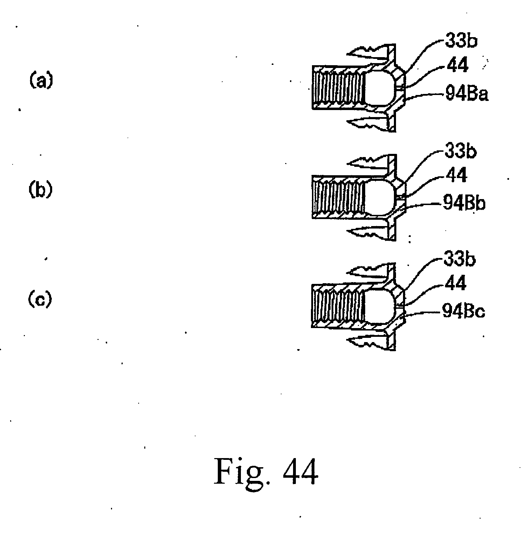

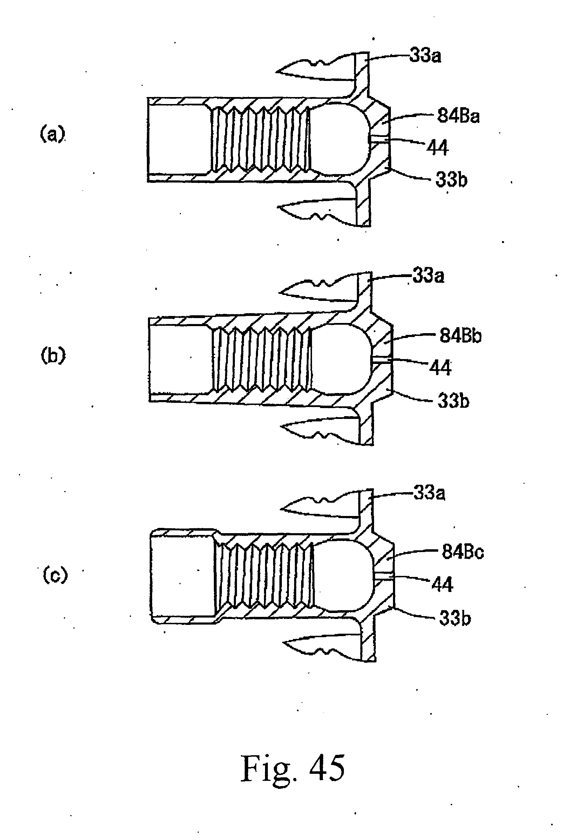

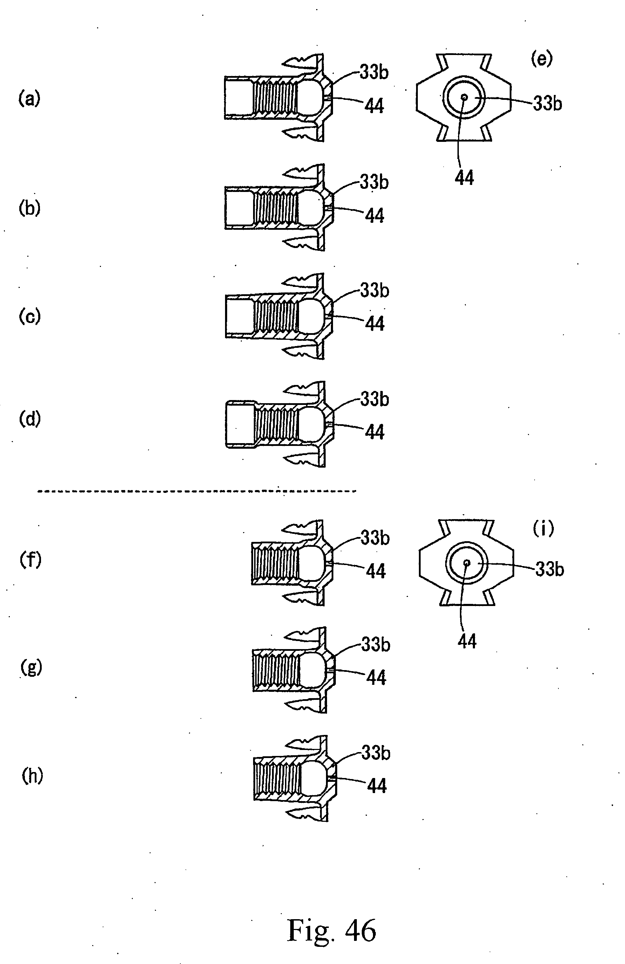

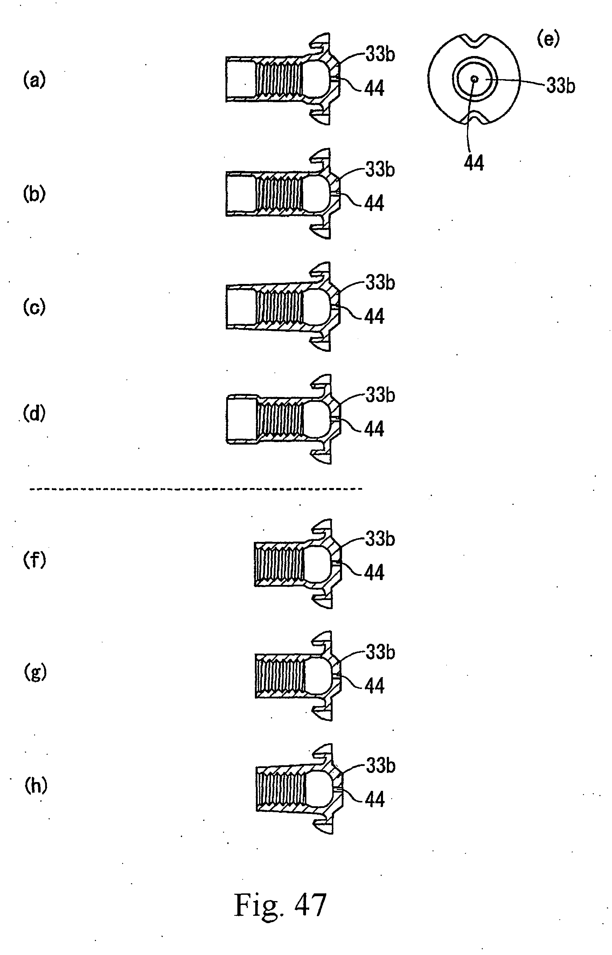

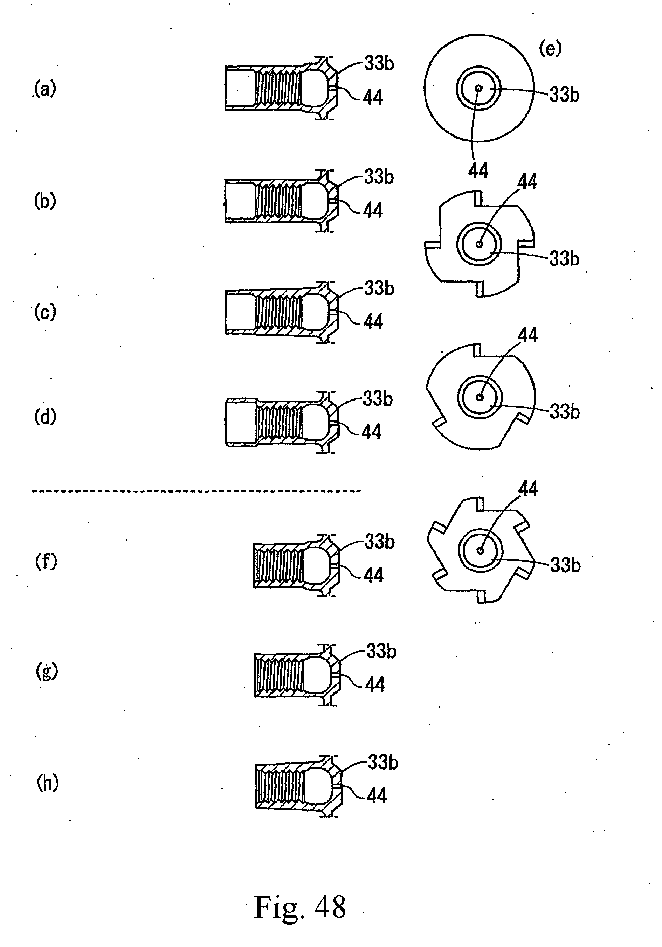

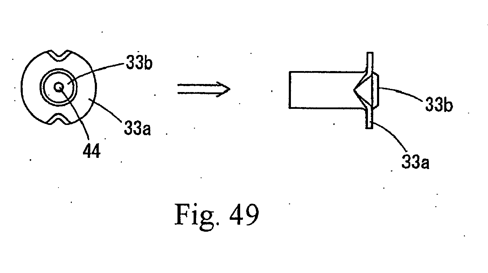

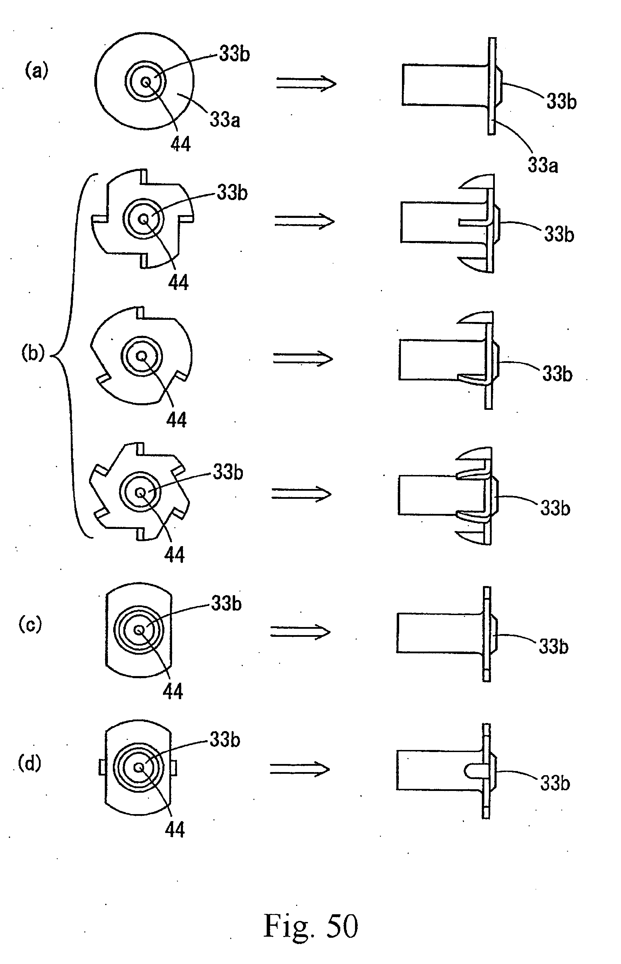

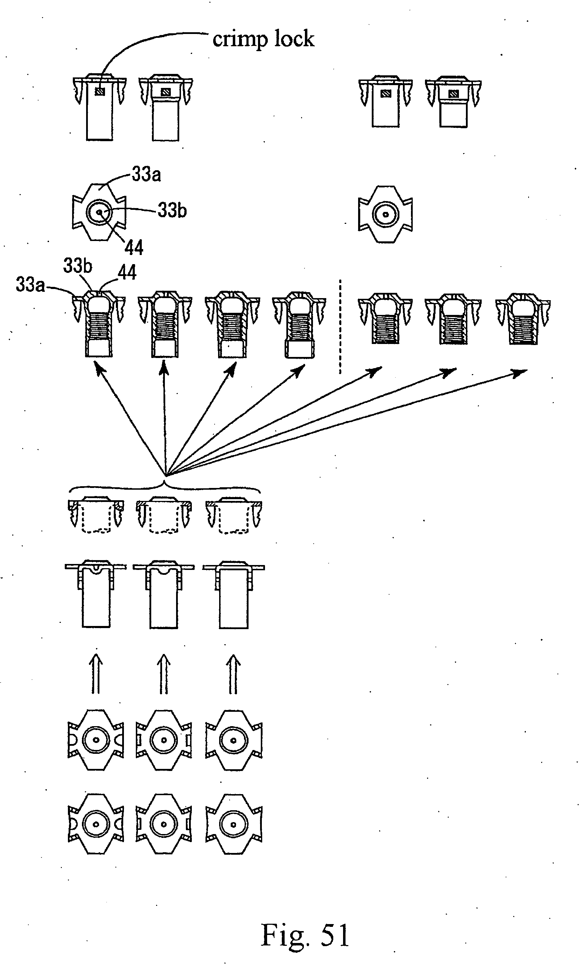

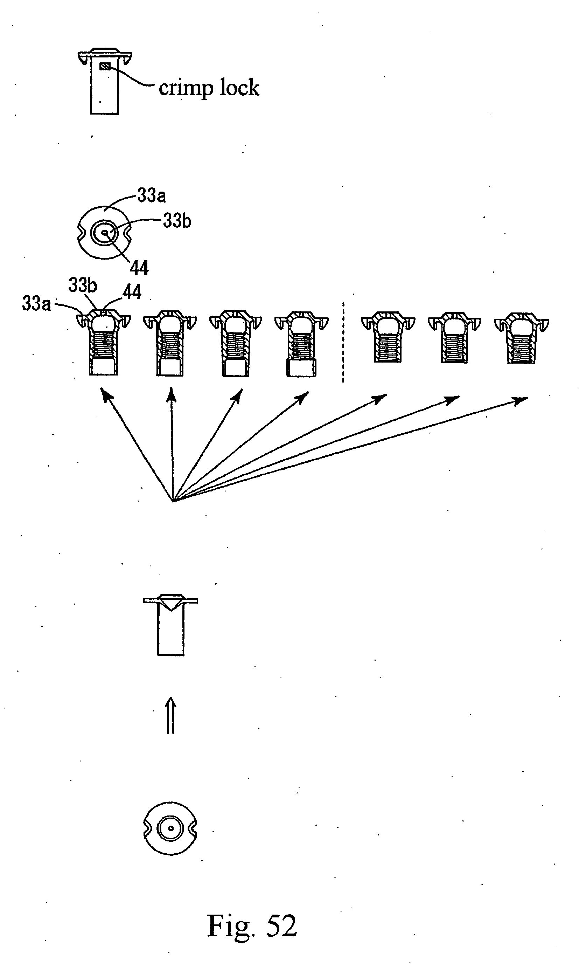

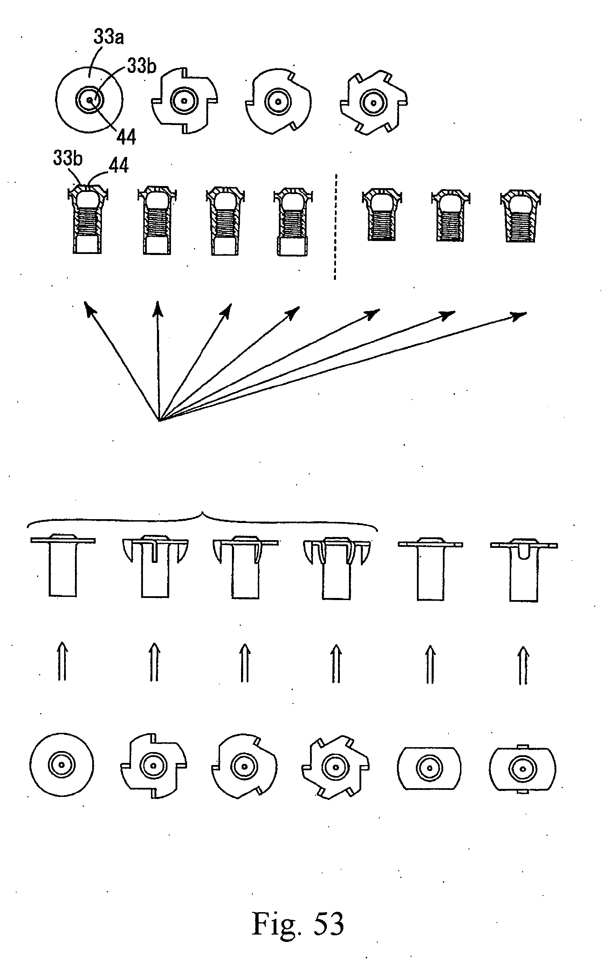

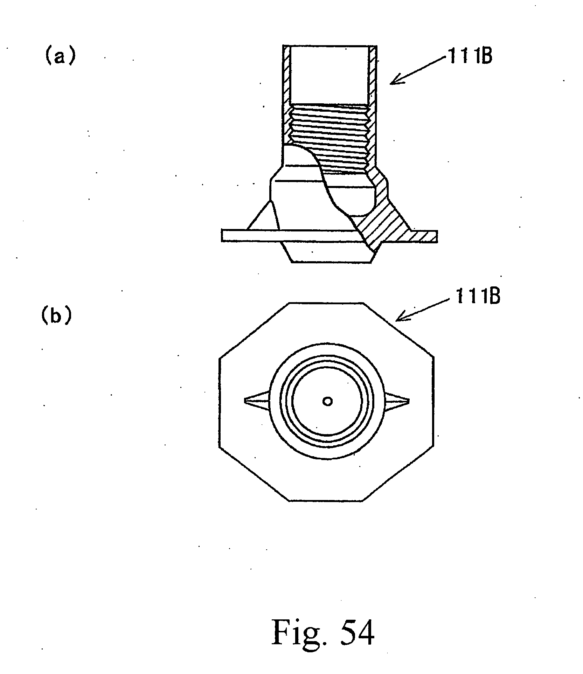

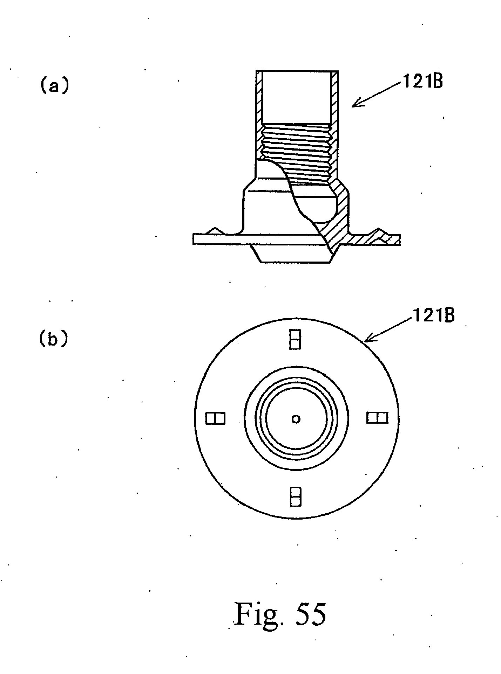

Various types of T-nuts of the present invention in which the exposed outer surface of the internal flange portion 33b of the T-nut is formed as a convex surface are shown in Figs. 41 to 55. As shown in Figs. 41 to 55, when the exposed outer surface of the internal flange portion 33b of the T-nut is formed as a convex surface, the convex portion appears in the sectional side view, and a concentric circular pattern appears in the bottom view. In each of T-nuts 71B, 94Ba, 94Bb, 94Bc, 84Ba, 84Bb, 84Bc, 111B, 121B as shown in Figs. 43, 44, 45, 54 and 55, the exposed outer surface of a convex shape protruded from the internal flange portion 33b is formed flat. The T-nuts in Figs. 41 to 55 are different from the T-nuts in Figs. 1 to 22 simply in terms of the shape of the exposed outer surface of the internal flange portion 33b having a convex shape outwardly protruded, and a shorter length of their shank. The shapes and functions of the remaining components or elements are the same, and their description is omitted.

In the T-nuts according to the aforementioned embodiments of the present invention, it is preferable that a region where a female screw is to be formed in the T-nut is provided with a part having disarranged threads as a lock means for preventing loosening of a bolt to be engaged.

The above embodiments have been disclosed by way of example, and the present invention is not limited thereto. It is intended that the claims define the scope of the present invention and all modifications within the scope of these claims and their equivalents be covered thereby.

Some of the symbols used in the drawings are summarized: 2: shank; 3: stepped portion; 4: hollow-cylindrical upper portion; 5: enlarged tubular lower portion; 16: protrusion; 17: protrusion; 20: annular groove; 33a: external flange portion; 33b: internal flange portion; 34: to-be-caulked portion; 35: female screw portion; 36: female screw; 37, 38, 39, 40: claws; 44: hole; 45, 46, 47, 48: protrusions; and 41, 51, 61, 71: T-nuts.

**Claims**

1. A T-nut, comprising:

    a tubular shank having a first end and a second end, and having an internal surface,
    a first flange portion extending outwardly from the first end,
    a second flange portion extending inwardly from first end, having a hole for communicating with the inside of the tubular shank at the center thereof,

wherein the first flange portion and the second flange portion are integrally formed with the tubular shank by pressing a metal plate.

2. T-nut comprising according to claim 1, wherein the tubular shank has a female screw portion on the internal surface.

3. A T-nut according to claim 1, wherein the first flange portion has a plurality of claws directed from the first end to the second end.

4. A T-nut according to claim 1, wherein the first flange portion has a shape selected from the group consisting of circular shape, substantially circular shape, octagonal shape, substantially octagonal shape and a modified octagonal shape.

5. A T-nut according to claim 1, wherein the first flange portion and/or the second flange portion has a concentric pattern.

6. A T-nut according to claim 1, further comprising a to-be-caulked portion formed from the second end.

7. A T-nut according to claim 1, wherein the shank has an outer periphery surface gradually expanding from the second end side toward the first end side.

8. A T-nut according to claim 1, wherein the shank comprises a stepped portion, a tubular upper portion extending from a second end, an enlarged tubular bottom portion having the outer periphery larger than the outer diameter of the tubular upper portion and extending from the stepped portion to the first flange portion.

9. A T-nut according to claim 6, further comprising a female screw portion formed on the internal surface, wherein the to-be-caulked portion has an inner diameter larger than that of the female screw portion and an outer diameter greater than that of the female screw portion.

10. A T-nut according to claim 9, further comprising an annular groove formed over the outer periphery of the shank in the vicinity of the boundary between the to-be-caulked portion and the female screw portion.

11. A T-nut according to claim 1, wherein the first flange portion has protrusions directed to the second end.

12. A T-nut according to claim 3, wherein the claws are formed notched.

13. A T-nut according to claim 3, wherein the claws are formed to have a hook shape.

14. T-nut according to Claim 1, wherein the first flange portion has a longitudinal length greater than a side length thereof.

15. A T-nut according to claim 1, wherein the first flange portion has a longitudinal length equal to a side length thereof.

16. A T-nut according to claim 1, wherein the first flange portion has a longitudinal length smaller than a side length thereof.

17. A T-nut according to claim 1, wherein a space is formed between the female screw portion and the second flange portion.

18. A T-nut according to claim 1, wherein an area of the hole is between 0.01mm to 1.5mm

19. A T-nut according to claim 1, wherein the hole is enlarged from an exposed surface of the second flange portion to the inside of the tubular shank,

Fig. 1

Fig.2

Fig. 3

(a)

36

39

41

4

2

40

37

33a

38

(b)

39

61

4

2

40

37

42

5

33a

38    3

(c)

51

4

16

3

16

5

17    13

Fig. 4

Fig. 5

Fig. 6

Fig. 7

Fig. 8

Fig. 9

Fig. 10

(a)

81a  2  33a

84a

33b

82  83

(b)

81b  2  39  33a

84b

33b

82  83

37

(c)

81c  2  39  33a

84c

33b

82  83

37

# Fig. 11

( a )

2

5

( b )

5

2

( c )

5

2

Fig. 12

(a)

34 33a
33b
44

(e) 44
33a
33b

(b)

34

(c)

34

(d)

34

(f)

33a
33b
44

(i) 44
33a
33b

(g)

(h)

Fig. 13

(a)

34

33a
33b
44

(e)

44

33b

33a

(b)

34

(c)

34

(d)

34

(f)

33a
33b
44

(g)

(h)

Fig. 14

Fig. 15

Fig. 16

(a)

44
33a
33b

(b)

(c)

44
33a
33b

(d)

44
33a
47a
47a
33b

33a
44
33b

33a
33b

47a
33a

Fig. 17

Fig. 18

crimp lock

Fig. 19

Fig. 20

(a)

(b)

Fig. 21

(a)

(b)

Fig. 22

(a)

11

14
12
15
15a
16
16
17
17
11A
13

(b)

11

12
14
15
16
16
17
13

Fig. 23

(a)

14a 14 12 11 18 19

19A 15a 11A 13 17 16

(b)

34a 34 32 31 18 19

19A 37 36 31A 33 39

Fig. 24

(a)

31
34
35
37
32
39
31A 36 33

(b)

32
31
39
34
40
35
37
43
33
38

Fig. 25

(a)

41A

-S-

33b    44    33a

(b)

44    41A

33b

b

33a

a

Fig. 26

(a)

61A

33b    44    33a

(b)

44    61A

b

33b

33a

a

Fig. 27

71A

Fig. 28

33b        44              33a

(a)

94Aa
44
33b
33a

(b)

94Ab
44
33b
33a

(c)

94Ac
44
33b
33a

Fig. 29

(a)

84Aa

44

33b

33a

(b)

84Ab

44

33a

(c)

84Ac

44

33b

33a

Fig. 30

Fig. 31

(a)

(b)

(c)

(d)

(e)

(f)

(g)

(h)

Fig. 32

(a)

(b)

(c)

(d)

(e)

(f)

(g)

(h)

Fig. 33

Fig. 34

(a)

(b)

(c)

(d)

Fig. 35

Fig. 36

crimp lock

Fig. 37

Fig. 38

(a)

111A

(b)

111A

Fig. 39

(a)

121A

(b)

121A

Fig. 40

(a)

41B

361

2

c

-S-

33b    44    33a

(b)

33b    44    41B

b

a

33a

Fig. 41

(a)

61B

361

2

S

33b    44

33a

(b)

44

61B

33b

b

33a

a

Fig. 42

Fig. 43

(a)

33b
44
94Ba

(b)

33b
44
94Bb

(c)

33b
44
94Bc

Fig. 44

(a)

33a

84Ba

44

33b

(b)

33a

84Bb

44

33b

(c)

33a

84Bc

44

33b

Fig. 45

(a)                                                    (e)

                                             33b
                                             44

                                             33b
(b)                                          44

                                             33b
(c)                                          44

                                             33b
(d)                                          44

- - - - - - - - - - - - - - - - - - - - - - -

(f)                                          33b     (i)
                                             44

(g)                                          33b
                                             44

(h)                                          33b
                                             44

Fig. 46

(a)              —33b
                     —44

(e)

       —33b

    44

(b)              —33b
                     —44

(c)              —33b
                     —44

(d)              —33b
                     —44

(f)              —33b
                     —44

(g)              —33b
                     —44

(h)              —33b
                     —44

Fig. 47

(a) 33b 44

(e) 33b 44

(b) 33b 44

44 33b

(c) 33b 44

44 33b

(d) 33b 44

44 33b

(f) 33b 44

(g) 33b 44

(h) 33b 44

Fig. 48

Fig. 49

Fig. 50

crimp lock

33a
33b
44

33b 44
33a

Fig. 51

crimp lock

33a
33b
44

33b 44
33a

Fig. 52

Fig. 53

(a)

111B

(b)

111B

Fig. 54

(a)

121B

(b)

121B

Fig. 55

**European Patent Office**

**EUROPEAN SEARCH REPORT**

Application Number

EP 05 02 8505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 375 499 B1 (LIN LI-LI) 23 April 2002 (2002-04-23) * column 1, line 7 - line 12 * * column 3, line 8 - line 10; figures 1-4 * | 1-19 | F16B37/04 |
| Y | EP 1 375 933 A (NAGAYAMA ELECTRONIC INDUSTRY CO., LTD) 2 January 2004 (2004-01-02) * figures * | 1-19 | |

TECHNICAL FIELDS SEARCHED (IPC)

F16B

The present search report has been drawn up for all claims

| Place of search | Date of completion of the search | Examiner |
|---|---|---|
| The Hague | 14 March 2006 | Martin, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 02 8505

This annex lists the patent family members relating to the patent documents cited in  the above-mentioned European search report.
The members are as contained in the European Patent Office EDP file on
The European Patent Office is in no way liable for these particulars which are merely  given for the purpose of information.

14-03-2006

| Patent document cited in search report | | Publication date | Patent family member(s) | | Publication date |
|---|---|---|---|---|---|
| US 6375499 | B1 | 23-04-2002 | NONE | | |
| EP 1375933 | A | 02-01-2004 | CA | 2433643 A1 | 27-12-2003 |
| | | | US | 2004022599 A1 | 05-02-2004 |

EPO FORM P0459

For more details about this annex : see Official Journal of the European Patent Office, No. 12/82